# EUROPÄISCHE PATENTSCHRIFT

(11) **EP 3 918 233 B1**
(45) Veröffentlichungstag und Bekanntmachung des Hinweises auf die Patenterteilung: **27.07.2022**
(21) Anmeldenummer: 20702778.0
(22) Anmeldetag: 29.01.2020
(51) Int. Cl.: F16J 15/26, F16J 15/28, F04B 39/04

(54) **PACKUNGSRING MIT SCHRÄGER ENTLASTUNGSÖFFNUNG**
PACKAGING RING WITH DIAGONAL RELIEF OPENING
BAGUE DE GARNITURE PRÉSENTANT UN ORIFICE DE DÉLESTAGE INCLINÉ

(30) Priorität: 29.01.2019 AT 500682019
(43) Veröffentlichungstag der Anmeldung: 08.12.2021
(73) Patentinhaber: Hoerbiger Wien GmbH, 1220 Wien (AT)
(72) Erfinder: SPIEGL, Bernhard, 1210 Wien (AT); KAUFMANN, Andreas, 1220 Wien (AT); LAGLER, Martin, 1220 Wien (AT); JANKO-GRASSLOBER, Marian, 1100 Wien (AT); KORNFELD, Matthias, 2345 Brunn/Geb. (AT)
(74) Vertreter: Patentanwälte Pinter & Weiss OG
(86) Internationale Anmeldenummer: PCT/EP2020/052179
(87) Internationale Veröffentlichungsnummer: WO 2020/157140

(56) Entgegenhaltungen:
- EP-A2- 0 995 933
- CH-A- 439 897
- JP-A- 2000 291 806
- US-A- 1 999 094
- US-A- 3 305 241
- US-A- 4 408 767
- US-A1- 2004 227 301

## Beschreibung

Die Erfindung betrifft einen Packungsring mit zumindest drei Ringsegmenten mit jeweils einem ersten Segmentende und einem zweiten Segmentende in Umfangsrichtung, wobei eine erste Tangentialkontaktfläche des ersten Segmentendes eines Ringsegments an einer zweiten Tangentialkontaktfläche des zweiten Segmentendes eines in Umfangsrichtung daran anschließenden Ringsegments anliegt, um eine radiale Abdichtung des Packungsrings zu erzeugen und eine, einem ersten axialen Ringende des Packungsrings zugewandte erste Axialkontaktfläche des ersten Segmentendes eines Ringsegments an einer, einem zweiten axialen Ringende des Packungsrings zugewandten zweiten Axialkontaktfläche des zweiten Segmentendes eines in Umfangsrichtung daran anschließenden Ringsegments anliegt, um eine axiale Abdichtung des Packungsrings zu erzeugen. Weiters betrifft die Erfindung eine Abdichtungsvorrichtung zur Abdichtung einer translatorisch oszillierenden Kolbenstange mit einem Gehäuse, in dem eine Anzahl von axial hintereinander angeordneten Packungsringen vorgesehen ist sowie einen Kolbenkompressor mit einem Kompressorgehäuse und zumindest einem daran angeordneten Zylindergehäuse, in dem ein Kolben translatorisch oszilliert. Zudem betrifft die Erfindung ein Verfahren zur Abdichtung einer translatorisch oszillierenden Kolbenstange eines Kolbenkompressors mit zumindest einem Packungsring.

Kolbenkompressoren in Kreuzkopf-Bauweise, vor allem in doppeltwirkender Bauweise, erfordern eine Abdichtung des kurbelseitigen Kompressionsraumes im Zylinder, in dem der zeitlich veränderliche (hohe) Zylinderdruck herrscht, entlang der oszillierenden Kolbenstange. Diese Abdichtung erfolgt in der Regel gegen den im Kurbelkasten herrschenden (niedrigen) Druck, der im Wesentlichen dem Umgebungsdruck entspricht. Die Dichtelemente, die in einer solchen Abdichtung zum Einsatz kommen, werden Packungsringe genannt und sind in einer sogenannten Druckpackung angeordnet. Die Dichtelemente können dabei Lateralbewegungen der Kolbenstange zu einem gewissen Grad folgen, ohne ihre Dichtwirkung zu verlieren. Zur Erhöhung der Lebensdauer und Zuverlässigkeit einer Druckpackung werden in einer Druckpackung üblicherweise mehrere solcher Packungsringe axial in Serie geschaltet. Solche Druckpackungen bzw. Abdichtungen sind aus dem Stand der Technik in unterschiedlichsten Ausgestaltungen hinlänglich bekannt, z.B. aus der GB 928 749 A, der US 1 008 655 A oder der EP 2 056 003 A1.

Aufgrund der Relativbewegung zwischen Kolbenstange und Packungsringen unterliegen die Packungsringe an den Kontaktflächen zur Kolbenstange einem gewissen Verschleiß. Dieser Ringverschleiß erfordert in der Regel geschnittene Ringformen, die ein selbsttätiges kontinuierliches Nachstellen des Ringes bei Materialabtrag an der Kontaktfläche Ring/Kolbenstange ermöglichen. Meist werden dazu radial und tangential geschnittene Ringe verwendet, welche paarweise in Packungskammern der Druckpackung eingesetzt werden, um die auftretenden Stoßspalte zur Verschleißkompensation gegenseitig abzudecken. Solche radial/tangential geschnittenen Ringkombinationen sind einfachwirkende Dichtungen, welche nur in Richtung des Kreuzkopfes abdichten, während im Laufe der kurbelseitigen Reexpansionsphase des Kolbenkompressors die radialen Schnitte sicherstellen, dass kein höherer Druck in der Packung eingeschlossen werden kann. Bei geschnittenen Ringformen kommen bekanntermaßen üblicherweise über den Außenumfang gewickelte Schlauchfedern zum Einsatz, welche die Packungsringe auch im drucklosen Zustand an die Kolbenstange pressen.

Speziell bei höheren Drücken kann bei herkömmlichen Anordnungen auch eine nennenswerte Extrusion der Packungsringe in den zwischen Kolbenstange und Packungsgehäuse bzw. Kammerscheibe gebildeten Spalt auftreten. Zur weitmöglichsten Vermeidung dieser Extrusion können zwischen dem Ring auf der niedrigen Druckseite und der Kammerscheibe zusätzliche metallische, die Kolbenstange nicht flächig berührende Stützringe verwendet werden, wie z.B. in der US 3 305 241 A offenbart.

Bei einer Kombination eines radial und eines tangential geschnittenen Packungsringes erfolgt die Abdichtung zur Kolbenstange hin im Wesentlichen nur durch den tangential geschnittenen Packungsring, dessen Ringsegmente sich durch die tangentiale Schnittführung bei Verschleiß zusammenschieben können und somit die Dichtwirkung beibehalten. Der radial geschnittene Packungsring dient im Wesentlichen nur dazu, die Verschleißspalte des tangentialen Packungsringes in axialer und radialer Richtung abzudichten. Der radiale Packungsring verschleißt nur so weit bis die Ringsegmente in Umfangsrichtung aneinander liegen. Die radial und tangential geschnittenen Packungsringe verschleißen somit unterschiedlich. Um zu verhindern, dass sich der radial und der tangential geschnittene Packungsring relativ zueinander verdrehen, was dazu führen kann, dass die Verschleißspalten des tangential geschnittenen Packungsringes nicht mehr abgedeckt sind und folglich die Dichtwirkung verloren gehen würde, muss zwischen den Ringen eine Verdrehsicherung vorgesehen sein. Eine solche Verdrehsicherung ist in der Regel als Stift ausgeführt, der in zugeordneten Ausnehmungen im radial und tangential geschnittenen Packungsring steckt. In der EP 2 056 003 A1 wurde deshalb schon vorgeschlagen, keine Packungsringkombination aus einem radial und tangential geschnittenen Packungsring vorzusehen, sondern nur einen einzigen Packungsring, der sowohl radial als auch tangential geschnitten ist. Dadurch kann die axiale Baulänge einer Druckpackung und folglich der gesamten Abdichtung reduziert werden.

Mit steigenden Kompressionsdrücken des Kompressors steigt auch die Beanspruchung der Packungsringe und damit auch deren Verschleiß. Eine bekannte Methode um die Belastung eines segmentierten Packungsrings zu reduzieren ist es, einen Druckausgleich vorzusehen, wie z.B. in der EP 2 056 003 A1 gezeigt ist. Dabei wird gezielt der anliegende höhere Druck über eine oder mehrere sich in Umfangrichtung erstreckende Druckausgleichsnuten in die dynamische Dichtfläche (radial zwischen Packungsring und Kolbenstange) und axial näher in Richtung der druckabgewandten Seite (kurbelgehäuseseitig) gebracht. Dadurch reduziert sich die Flächenpressung in der dynamischen Dichtfläche, die Reibleistung sinkt und die Lebensdauer steigt. Nachteilig dabei ist aber, dass sich dieses Prinzip des Druckausgleichs nur bis zu einem gewissen Grad steigern lässt, da durch die Druckausgleichsnut(en) die axial verbleibende Restwandstärke am Packungsring nicht mehr ausreichend stabil ist und es aufgrund der anliegenden Drücke zu Deformationen und folglich zu Leckagen kommen kann. Ein weiterer Nachteil hochgradig druckausgeglichener Packungsringe ist es, dass die Ringe mit nur noch geringer Restkraft radial an die Kolbenstange angepresst werden. Da die Kolbenstange neben der translatorisch oszillierenden Bewegung in der Regel auch einer gewissen lateralen Bewegung unterliegt, können Reibkräfte an der axialen Anlagefläche des Packungsrings die radiale Bewegung des Rings verhindern oder zumindest verzögern, sodass es zum Abheben des Ringes von der Kolbenstange und damit einhergehenden Leckagen kommen kann.

US 1,999,094 offenbart einen Packungsring mit drei Ringsegmenten, wobei eine schräge Bohrung vorgesehen ist, die eine umlaufende Nut an der inneren Umfangsfläche mit einer Ausnehmung an der axialen Stirnfläche verbindet. Der Ring ist nicht tangential geschnitten. US 1,828,178 offenbart keinen Packungsring zur Abdichtung, sondern einen dreiteiligen tangential geschnittenen Ölabstreifring. An der inneren Umfangsfläche ist eine Umfangsnut angeordnet, welche über Öffnungen mit der axialen Stirnfläche verbunden ist. Durch die Öffnungen wird von der Kolbenstange abgestreiftes Öl nach außen abgeführt. KR 101898141 B1 offenbart einen vierteiligen Packungsring mit axialer und tangentialer Abdichtung. Je Ringsegment ist eine zentrale Entlastungsbohrung angeordnet. CH 439 897 A offenbart einen mehrteiligen Packungsring, der aus einem Dichtring und einem axial daran anschließenden Deckring besteht. Der Dichtring weist drei Ringsegmente auf, die durch Tangentialfugen getrennt sind. Je Ringsegment sind eine oder mehrere Drosselbohrungen vorgesehen, welche die Innenumfangsfläche mit der Außenumfangsfläche verbinden.

Es ist daher eine Aufgabe der Erfindung, einen Packungsring, eine Abdichtungsvorrichtung und ein Verfahren zur Abdichtung einer Kolbenstange eines Kolbenkompressors anzugeben, die die Nachteile des Stands der Technik beseitigen. Insbesondere soll der Packungsring möglichst einfach aufgebaut sein, bei möglichst geringer axialer Erstreckung eine verbesserte Abdichtung in radialer Richtung sowie eine Verschleißkompensation ermöglichen sowie einen verbesserten Druckausgleich über die Lebensdauer ermöglichen..

Erfindungsgemäß wird die Aufgabe dadurch gelöst, dass an zumindest einem Ringsegment zumindest eine Entlastungsöffnung vorgesehen ist, die sich von einer radial innenliegenden Innenumfangsfläche des Ringsegments bis zu einer radial außenliegenden Außenumfangsfläche und/oder bis zum zweiten axialen Ringende des Ringsegments erstreckt, wobei zumindest ein, an die radial innenliegende Innenumfangsfläche des Ringsegments angrenzender Abschnitt der zumindest einen Entlastungsöffnung in Richtung des ersten axialen Ringendes geneigt oder gekrümmt ist. Dadurch wird ein Packungsring geschaffen, der im montierten Zustand während des Betriebs eines Kompressors einen Druckausgleich zwischen einem an der Außenumfangsfläche und dem zweiten axialen Ringende anliegenden hohen Druck und einem am ersten axialen Ringende anliegenden relativ dazu niedrigeren Druck ermöglicht, wobei der Druckausgleich an den radialen Verschleiß des Packungsrings angepasst werden, insbesondere erhöht werden kann.

Vorzugsweise ist ein in die radial innenliegende Innenumfangsfläche des Ringsegments mündendes erstes Entlastungsöffnungsende zumindest einer Entlastungsöffnung in einem Entlastungsöffnungsaxialabstand vom ersten axialen Ringende beabstandet, der 4% bis 40%, vorzugsweise 4-20% der axialen Ringbreite des Ringsegments beträgt. Dadurch kann der Druckausgleich in axialer Richtung möglichst nahe an die Niederdruckseite herangeführt werden, ohne den Packungsring unzulässig zu schwächen.

Vorzugsweise weist die zumindest eine Entlastungsöffnung zumindest am Entlastungsöffnungsende eine Entlastungsöffnungslänge in Umfangsrichtung auf, die 2-100% der axialen Ringbreite des Packungsrings beträgt, vorzugsweise 2-50%, insbesondere maximal 25% der axialen Ringbreite. Dadurch kann beispielsweise eine sich über einen relativ kleinen Bereich in Umfangsrichtung erstreckende nutförmige Ausnehmung an der Innenumfangsfläche vorgesehen werden.

Vorzugsweise sind an zumindest einem Ringsegment zumindest zwei Entlastungsöffnungen vorgesehen, wobei die Entlastungsöffnungen jeweils ein in die radial innenliegende Innenumfangsfläche des Ringsegments mündendes erstes Entlastungsöffnungsende aufweisen, wobei die ersten Entlastungsöffnungsenden zweier in Umfangsrichtung nebeneinander angeordneter Entlastungsöffnungen in einem Entlastungsöffnungsumfangsabstand z voneinander beabstandet angeordnet sind, der vorzugsweise 1mm 15mm beträgt. Durch diese vorteilhafte Ausgestaltung kann der Druckausgleich in Umfangsrichtung möglichst gleichmäßig verteilt werden.

Wenn zumindest eine Entlastungsöffnung vorgesehen ist, deren in die radial innenliegende Innenumfangsfläche des Ringsegments mündendes erstes Entlastungsöffnungsende von einem, in die radial außenliegende Außenumfangsfläche des Ringsegments mündenden zweiten Entlastungsöffnungsende der Entlastungsöffnung in Umfangsrichtung beabstandet ist, kann beispielsweise an der innenliegenden Innenumfangsfläche im Bereich des ersten Segmentendes eine Entlastungsbohrung vorgesehen werden, die sich schräg von der innenliegenden Innenumfangsfläche bis zur außenliegende Außenumfangsfläche des Packungsrings erstreckt.

Vorteilhafterweise weist die zumindest eine Entlastungsöffnung zumindest am Entlastungsöffnungsende eine axiale Entlastungsöffnungsbreite auf, die 2-30%, vorzugsweise 2-20% der axialen Ringbreite des Packungsrings beträgt. Vorzugsweise weist die Entlastungsöffnung einen geraden Verlauf und einen konstanten kreisrunden Querschnitt mit einem Entlastungsöffnungsdurchmesser auf, der zwischen 2-30%, vorzugsweise 2-20% der axialen Ringbreite des Packungsrings beträgt. Dadurch können die Entlastungsöffnungen einfach hergestellt werden, beispielsweise durch Bohren oder Fräsen, wobei sich die Dimensionen als vorteilhaft erwiesen haben, um einen möglichst guten Druckausgleich zu erreichen.

An der radial außenliegenden Außenumfangsfläche zumindest eines Ringsegments, vorzugsweise jedes Ringsegments, zumindest eine Axialnut vorgesehen ist, die sich vom ersten axialen Ringende bis zum zweiten axialen Ringende erstreckt. Dadurch kann die Struktursteifigkeit des Ringsegments und folglich des Packungsrings verbessert werden.

Vorzugsweise ist an zumindest einem Ringsegment zumindest eine Verschleißöffnung vorgesehen, die sich von der radial außenliegenden Außenumfangsfläche und/oder dem zweiten axialen Ringende des Ringsegments in Richtung der radial innenliegenden Innenumfangsfläche des Ringsegments erstreckt, wobei ein der Innenumfangsfläche zugewandtes radial inneres Verschleißöffnungsende der zumindest einen Verschleißöffnung in einem Abstand in radialer Richtung des Ringsegments von der radial innenliegenden Innenumfangsfläche des Ringsegments beabstandet ist, der höchstens 40% einer, sich zwischen der außenliegenden Außenumfangsfläche und der radial innenliegenden Innenumfangsfläche des Ringsegments erstreckenden radialen Ringhöhe beträgt, wobei das Verschleißöffnungsende zwischen dem ersten und dem zweiten axialen Ringende liegt und vom ersten und zweiten axialen Ringende beabstandet ist. Dadurch kann ab einem bestimmten Verschleißzustand, bei dem die Verschleißöffnung an der radial innenliegenden Innenumfangsfläche des Packungsrings freigelegt wird, der Druckausgleich weiter erhöht werden und der Anpressdruck verringert werden.

Es ist vorteilhaft, wenn zumindest ein, der radial innenliegende Innenumfangsfläche zugewandter Endabschnitt zumindest einer Verschleißöffnung in Richtung des ersten axialen Ringendes geneigt ist. Dadurch kann ähnlich wie bei der geneigten Entlastungsöffnung das Druckausgleichsverhalten ab dem Freilegen der Verschleißöffnung an der radial innenliegenden Innenumfangsfläche des Packungsrings an den fortschreitenden radialen Verschleiß des Packungsrings angepasst werden, insbesondere erhöht werden.

Bevorzugterweise weist zumindest eine Verschleißöffnung einen geraden Verlauf und einen kreisrunden Querschnitt mit einem Verschleißöffnungsdurchmesser auf, der 2-60%, vorzugsweise 2-40%, der axialen Ringbreite des Packungsrings beträgt. Dadurch können die Verschleißöffnungen einfach hergestellt werden, beispielsweise durch Bohren oder Fräsen, wobei sich die Dimensionen als vorteilhaft erwiesen haben, um einen möglichst guten Druckausgleich zu erreichen.

Wenn eine, dem ersten axialen Ringende zugewandte Begrenzung zumindest einer Verschleißöffnung in einem Verschleißöffnungsaxialabstand in axialer Richtung vom ersten axialen Ringende beabstandet ist, der 2% bis 20%, vorzugsweise 2-15% der axialen Ringbreite beträgt, kann der Druckausgleich verbessert werden, ohne die Stabilität des Packungsrings unzulässig zu verringern.

Gemäß einer weiteren vorteilhaften Ausgestaltung ist an zumindest einem Ringsegment zumindest eine Ausgleichsausnehmung vorgesehen, die sich von der radial außenliegenden Außenumfangsfläche des Ringsegments in Richtung der radial innenliegenden Innenumfangsfläche des Ringsegments erstreckt und vom ersten axialen Ringende in Richtung des zweiten axialen Ringendes erstreckt, wobei vorzugsweise zumindest eine Ausgleichsausnehmung je Ringsegment vorgesehen ist. Dadurch kann der axiale Anpressdruck an eine Wandung und dadurch die Reibung in radialer Richtung reduziert werden, wodurch der Packungsring lateralen Bewegungen einer Kolbenstange besser folgen kann.

Es ist weiters vorteilhaft, wenn an der radial innenliegenden Innenumfangsfläche zumindest eines Ringsegments zumindest eine Anlaufausnehmung vorgesehen ist, die sich in axialer Richtung des Ringsegments vom zweiten axialen Ringende in Richtung des ersten axialen Ringendes erstreckt und in radialer Richtung des Ringsegments von der radial innenliegenden Innenumfangsfläche des Ringsegments in Richtung der radial außenliegenden Außenumfangsfläche des Ringsegments erstreckt, um eine relativ zur gesamten radial innenliegenden Innenumfangsfläche kleinere Anlauffläche auszubilden, wobei die Anlaufausnehmung eine radiale Anlaufausnehmungstiefe von maximal 3% der Ringhöhe aufweist, wobei ein erstes Entlastungsöffnungsende der zumindest einen Entlastungsöffnung bis zu einem Verschleiß der Anlauffläche in die Anlaufausnehmung mündet und nach einem Verschleiß der Anlauffläche in die radial innenliegenden Innenumfangsfläche mündet. Dadurch kann an der, von der Anlaufausnehmung nicht umfassten radial innenliegenden Innenumfangsfläche des Packungsrings während der Hochlaufphase eines Kompressors eine erhöhte Flächenpressung erzeugt werden, was insbesondere bei stark druckausgeglichenen Packungsringen vorteilhaft ist, um die Leckage während des Hochlaufs zu reduzieren.

Die Aufgabe wird weiters mit einer Abdichtungsvorrichtung gelöst, wobei zumindest ein erfindungsgemäßer Packungsring in der Abdichtungsvorrichtung vorgesehen ist, sowie mit einem Kolbenkompressor, wobei im Kompressorgehäuse zumindest ein erfindungsgemäßer Packungsring vorgesehen ist.

Die Aufgabe wird zudem mit einem Verfahren gemäß Anspruch 14 gelöst. Anspruch 15 betrifft eine vorteilhafte Ausgestaltung des Verfahrens.

Die gegenständliche Erfindung wird nachfolgend unter Bezugnahme auf die Figuren 1 bis 8d näher erläutert, die beispielhaft, schematisch und nicht einschränkend vorteilhafte Ausgestaltungen der Erfindung zeigen. Dabei zeigt
Fig.1 eine Abdichtungseinrichtung für eine Kolbenstange,
Fig.2 ein Packungsring in einer isometrischen Ansicht,
Fig.3a und 3b einen Packungsring bzw. ein Ringsegment in einer Draufsicht auf das erste axiale Ringende,
Fig.4a und 4b einen Packungsring bzw. ein Ringsegment in einer Draufsicht auf das zweite axiale Ringende,
Fig.5a und 5b Druckverhältnisse an einem Packungsring,
Fig.6 eine Packungsring in einer Draufsicht auf die Außenumfangsfläche und Schnittdarstellungen an verschiedenen Positionen des Packungsrings,
Fig.7a-7d jeweils ein Ringsegment des Packungsrings mit unterschiedlichen Ausgestaltungen von Ausgleichsausnehmungen,
Fig.8a-8d ein Ringsegment des Packungsrings mit einem Anlaufabschnitt in verschiedenen Ansichten.

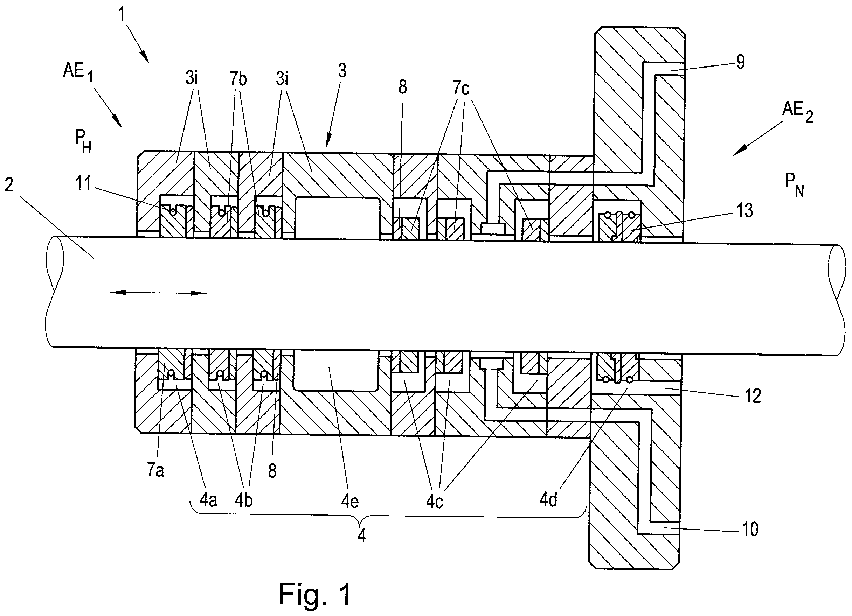

In Fig.1 ist eine im Stand der Technik bekannte Abdichtungsvorrichtung 1 (Druckpackung) für eine translatorisch oszillierende Kolbenstange 2 dargestellt, beispielsweise eines (nicht dargestellten) hinlänglich bekannten Kolbenkompressors mit Kreuzkopf. Die Kolbenstange 2 führt im Wesentlichen eine translatorisch oszillierende Bewegung aus, wie durch den Doppelpfeil symbolisiert ist. Die translatorische Bewegung resultiert aus der bekannten Kreuzkopf-Bauweise von Kolbenmaschinen, die insbesondere bei großen, relativ langsam laufenden Kolbenmaschinen zum Einsatz kommt, beispielsweise bei Gas-Kompressoren oder Groß-Dieselmotoren. Dabei werden Seitenkräfte der Schubstange an einem sogenannten Kreuzkopf-Gelenk abgestützt, das im Kurbelgehäuse gelagert angeordnet ist. Der Kolben, der mit einer Kolbenstange am Kreuzkopf befestigt ist, führt dadurch nur noch eine im Wesentlichen translatorische Bewegung aus. Das Konzept des Kreuzkopfs ist grundsätzlich bekannt, weshalb an dieser Stelle nicht näher darauf eingegangen wird. Unter reiner translatorischer Bewegung ist hier allerdings zu verstehen, dass die Kolbenstange 2 auch geringen lateralen Bewegungen unterworfen sein kann.

Die Abdichtungseinrichtung 1 ist im montierten Zustand im Kolbenkompressor so angeordnet, dass ein erstes axiales Abdichtungsende AE1 in axialer Richtung dem in einem Zylinder angeordneten Kolben des Kolbenkompressors (nicht dargestellt) zugewandt ist. Ein gegenüberliegendes zweites axiales Abdichtungsende AE2 der Abdichtungsvorrichtung 1 ist dem Kurbelgehäuse des Kolbenkompressors zugewandt. Die Abdichtungsvorrichtung 1 dient damit zur Abdichtung eines hohen Drucks P_{H} am ersten Abdichtungsende AE1 (im Zylinder) gegenüber einem relativ dazu niedrigeren Druck P_{N} am zweiten Abdichtungsende AE2 (im Kurbelgehäuse), der im Wesentlichen dem Umgebungsdruck entspricht oder geringfügig höher sein kann. Eine möglichst gute Dichtwirkung zu erzielen ist wichtig, um zu gewährleisten, dass möglichst wenig komprimiertes Medium aus dem Zylinder in das Kurbelgehäuse und von dort unter Umständen in die Umgebung austreten kann.

Insbesondere bei Gas-Kompressoren, bei denen beispielsweise Erdgas komprimiert wird, ist dies sehr wichtig, um zu vermeiden, dass ein brennbares Gemisch aus Gas und Luft außerhalb des Kompressors gebildet wird, das unter Umständen zu einer Flamme oder einer Explosion führen könnte. Zudem ist eine möglichst gute Abdichtung aus Sicherheitsgründen erforderlich, um keine Menschen in der Umgebung des Kompressors zu gefährden. Zusätzlich ist eine möglichst gute Abdichtung vorteilhaft, um die Liefermenge und folglich den Wirkungsgrad des Kompressors zu erhöhen.

Die Abdichtungsvorrichtung 1 weist in der Regel ein im Wesentlichen zylinderförmiges Gehäuse 3 auf, dass beispielsweise aus einer Anzahl i von axial hintereinander angeordneten Gehäusesegmenten 3i (auch Kammerscheiben genannt) zusammengebaut sein kann. Im dargestellten Beispiel weist die Abdichtungsvorrichtung 1 eine Mehrzahl von der Kurbelstange 2 zugewandten Kammern 4auf, die hier durch Ausnehmungen in den Gehäusesegmenten 3i ausgebildet sind. In den Kammern 4sind jeweils ein oder mehrere Packungsringe 7a-7c in verschiedenen Ausführungsformen angeordnet, z.B. die eingangs genannte Kombination aus einem radial geschnittenen Packungsring und einem tangential geschnittenen Packungsring oder, so wie dargestellt, einen kombinierten radial/tangential geschnittenen Packungsring 7b. Axial an die Packungsringe 7a-c anschließend kann zur Vermeidung einer Extrusion der Packungsringe 7a-c jeweils noch ein Stützring 8 vorgesehen sein, der z.B. aus einem geeigneten Metall hergestellt ist. Die dargestellte Abdichtungsvorrichtung 1 weist beispielhaft drei verschiedene Typen von Packungsringen 7 auf, wobei als erster an den Zylinder angrenzender Packungsring 7a ein sogenannter Druckbrechring oder "pressure breaker" vorgesehen ist, der dazu dient, die Strömungsgeschwindigkeit des Gases zu reduzieren. In Richtung Kurbelgehäuse an den Packungsring 7a angrenzend sind zwei Packungsringe 7b, jeweils in einer Kammer 4b angeordnet. Die Packungsringe 7b sind hier herkömmliche kombinierte radial/tangential geschnittene Packungsringe. Die axial daran anschließenden Packungsringe 7c sind jeweils in einer Kammer 4c angeordnet, und sind im dargestellten Beispiel durch eine Pufferkammer 4e von den Kammern 4b bzw. den darin angeordneten Packungsringen 7b getrennt. Die Packungsringe 7c bilden im dargestellten Ausführungsbeispiel eine Dichtbarriere aus, wie beispielsweise in der EP 2 376 819 B1 oder EP 2 855 982 B1 beschrieben. Hierzu wird in die Kammern 4c ein unter Druck stehendes Dichtmedium, z.B. Dichtöl, über eine Zulaufleitung 9 zugeführt. Über eine Ablaufleitung 10 kann das Dichtmedium für eine Umwälzung abgeführt werden. Durch das Dichtmedium werden die Packungsringe 7c von radial außen und axial mit einem Öldruck beaufschlagt und von diesem gegen die Kolbenstange 2 und axial auseinander gedrückt, um die Abdichtung zu erzeugen bzw. zu verbessern. Die Packungsringe 7b werden hingegen mittels am Umfang angeordneter Schlauchfedern 11 an der Kolbenstange 2 gehalten und im Betrieb durch eine Druckdifferenz gegen die Kolbenstange 2 gedrückt. Die Abdichtung durch eine Dichtbarriere mittels Packungsringen 7c ist allerdings ist aber nur der Vollständigkeit halber dargestellt und spielt für die Erfindung keine Rolle.

Am zweiten axialen Abdichtungsende AE2 der Abdichtungsvorrichtung 1 sind anschließend an die Packungsringe 7c zwei Abstreifringe 13 angeordnet, die dazu vorgesehen sind, an der Kolbenstange 2 haftendes Dichtmedium abzustreifen und zu sammeln. Die Abstreifringe 13 streifen das Dichtmedium ab und führen es nach radial außen in eine Kammer 4d ab. Von der Kammer 4d wird das Dichtmedium mittels einer Sammelleitung 12 abgeführt, danach beispielsweise gefiltert, in einem Vorratsbehälter gesammelt und erneut den Packungsringen 7bzugeführt.

Die Abdichtungsvorrichtung 1 in Fig.1 ist natürlich nur beispielhaft und kann beliebig anders ausgeführt sein, insbesondere mit anderen Anordnungen von Packungsringen 7a-c und/oder Abstreifringen 13. Beispielsweise könnte auf die Gehäusesegmente 3i zur Ausbildung der Kammern 4c für die Abdichtung mittels Dichtbarriere und die Pufferkammer 4e auch gänzlich verzichtet werden und in der Abdichtungsvorrichtung 1 nur Gehäusesegmente 3i mit Kammern 4b für Packungsringe 7b und einer oder mehrerer Kammer/n 4d für Abstreifring/e 13 vorgesehen werden. Erfindungsgemäß ist in der Abdichtungsvorrichtung 1 zumindest ein nachfolgend beschriebener erfindungsgemäß ausgeführter Packungsring 14 angeordnet.

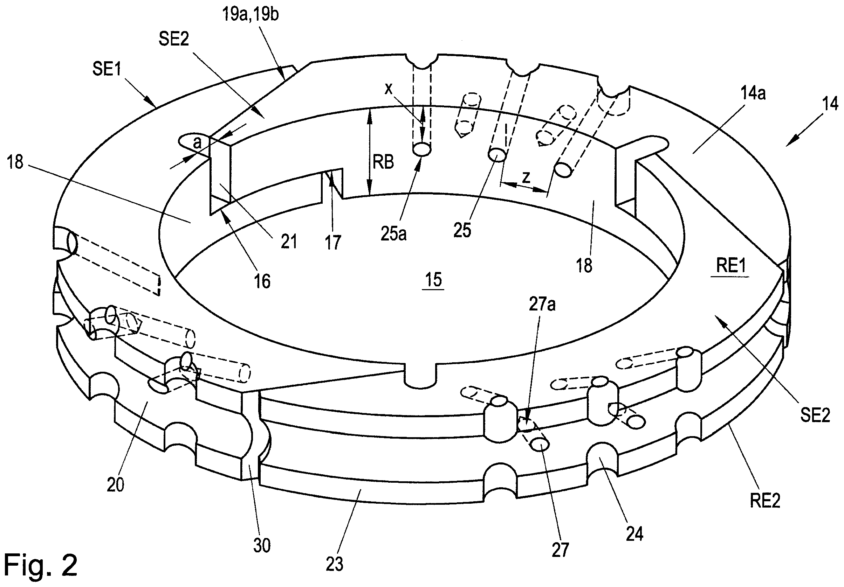

Der nachfolgend anhand der Fig.2-Fig.8d erläuterte erfindungsgemäße Packungsring 14 betrifft beispielsweise einen der dargestellten Packungsringe 7b in Fig.1. Natürlich ist die gezeigte Abdichtungsvorrichtung 1 aber nur beispielhaft zu verstehen, um die Anwendung des erfindungsgemäßen Packungsrings 14 zu erläutern. Die Abdichtungsvorrichtung 1 könnte natürlich auch mehr oder weniger trockenlaufende Packungsringe 7a (Druckbrechringe), Packungsringe 7b, mittels Dichtmedium beaufschlagte Packungsringe 7c und Abstreifringe 13 aufweisen, z.B. auch nur einen oder mehrere trockenlaufende Packungsringe 7b, wobei zumindest ein erfindungsgemäßer Packungsring 14 vorgesehen ist.

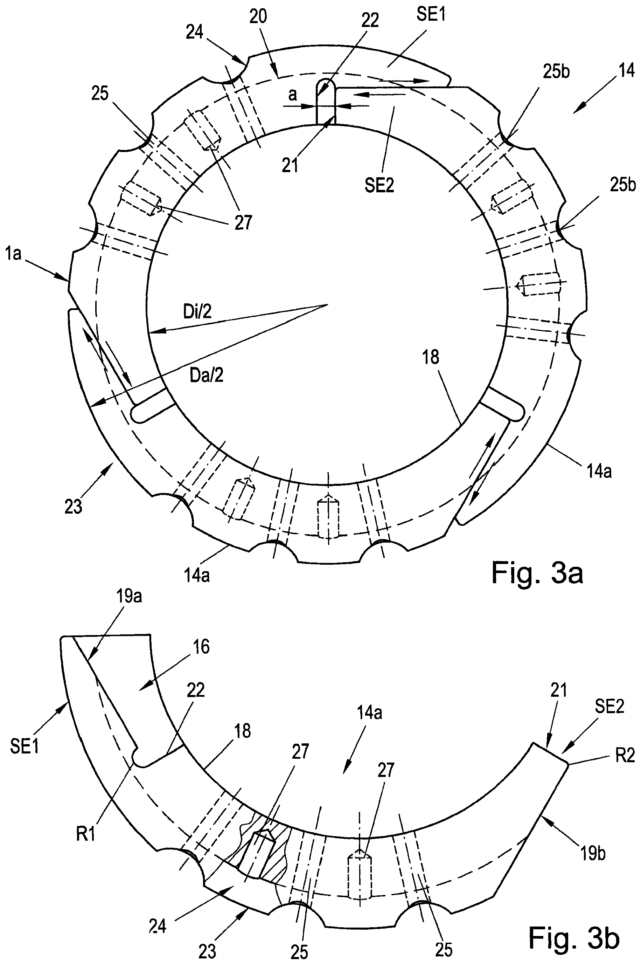

In Fig.2 ist ein Packungsring 14 gemäß einer vorteilhaften Ausgestaltung der Erfindung dargestellt. Der Packungsring 14 weist eine zentrale im Wesentlichen zylindrische Öffnung 15 auf, durch welche sich im montierten Zustand die translatorisch oszillierende Kolbenstange 2 (siehe Fig.1), beispielsweise eines Kolbenkompressors, erstreckt. Der Durchmesser der zylindrischen Öffnung 15, also der Innendurchmesser Di (siehe Fig. 3a) des Packungsrings 14 entspricht im Wesentlichen dem Durchmesser der Kolbenstange 2 bzw. passt sich im Betrieb auch bei Verschleiß daran an, wie noch näher erläutert wird. Der Packungsring 14 weist zumindest drei Ringsegmente 14a mit jeweils einem ersten Segmentende SE1 in Umfangsrichtung und einem zweiten Segmentende SE2 in Umfangsrichtung auf. Die drei Ringsegmente 14a sind vorzugsweise identisch ausgeführt und können in Umfangsrichtung aneinander angrenzend zusammengesetzt werden, um den Packungsring 14 auszubilden. Die Unterteilung des Packungsrings 14 in Ringsegmente 14a hat den Vorteil, dass der Packungsring 14 einfacher an der Kolbenstange 2 montiert werden kann und dass ein im Betrieb des Kompressors auftretender Verschleiß des Packungsrings 14 besser kompensiert werden kann. Insbesondere muss die Kolbenstange 2 nicht demontiert werden, um den Packungsring 14 um die Kolbenstange 2 herum anzuordnen.

Am ersten Segmentende SE1 eines Ringsegments 14a sind eine erste Tangentialkontaktfläche 19a und eine erste Axialkontaktfläche 16 vorgesehen (siehe auch Fig.3b), wobei die erste Axialkontaktfläche 16 dem ersten axialen Ringende RE1 zugewandt ist. Sowohl die erste Tangentialkontaktfläche 19a als auch die erste Axialkontaktfläche 16 sind vorzugsweise durch eine erste Verschleißbegrenzungsfläche 22 begrenzt. Im dargestellten Beispiel grenzen die erste Tangentialkontaktfläche 19a und die erste Axialkontaktfläche 16 direkt aneinander an und sind vorzugsweise in einem rechten Winkel zueinander angeordnet. Im einfachsten Fall kann am ersten Segmentende SE1 eine erste axiale Segmentausnehmung vorgesehen sein (siehe auch Fig.3b), die sich von einem ersten axialen Ringende RE1 des Packungsrings 14 teilweise in Richtung eines axial gegenüberliegenden zweiten axialen Ringendes RE2 erstreckt. Die Begrenzungsflächen der ersten axialen Segmentausnehmung bilden damit die erste Tangentialkontaktfläche 19a und die erste Axialkontaktfläche 16 aus sowie zusätzlich die erste Verschleißbegrenzungsfläche 22, deren Funktion nachfolgend noch im Detail erläutert wird.

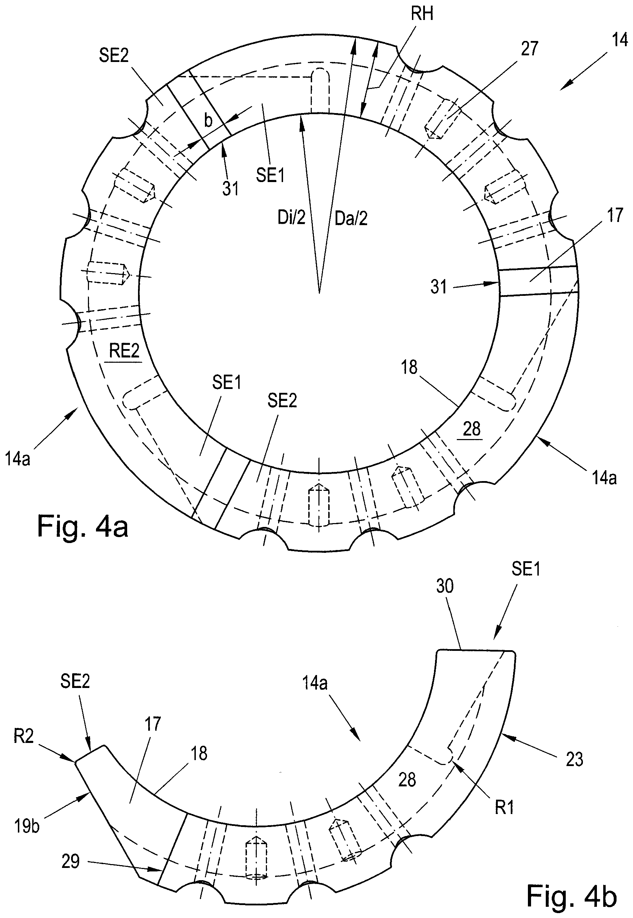

Am zweiten Segmentende SE2 eines Ringsegments 14a ist eine zweite Tangentialkontaktfläche 19b vorgesehen, die an der ersten Tangentialkontaktfläche 19a des ersten Segmentendes SE1 eines in Umfangrichtung daran anschließenden Ringsegments 14a anliegt, um eine radiale Abdichtung des Packungsrings 14 zu erzeugen. Zudem ist am zweiten Segmentende SE2 eines Ringsegments 14a eine zweite Axialkontaktfläche 17 vorgesehen (siehe auch Fig.4a+4b), die an der ersten Axialkontaktfläche 16 des ersten Segmentendes SE1 eines in Umfangsrichtung daran angrenzenden Ringsegments 14a anliegt, um eine axiale Abdichtung des Packungsrings 14 zu erzeugen. Die zweite Tangentialkontaktfläche 19b und die zweite Axialkontaktfläche 17 grenzen vorzugsweise aneinander an und sind vorteilhafterweise in einem rechten Winkel zueinander angeordnet. Im einfachsten Fall kann, so wie dargestellt, am zweiten Segmentende SE2 der Ringsegmente 14a eine zweite axiale Segmentausnehmung vorgesehen sein (siehe auch Fig.4b), die sich vom zweiten axialen Ringende RE2 des Packungsrings 14 teilweise axial in Richtung des gegenüberliegenden ersten axialen Ringendes RE1 erstreckt. Die axiale Begrenzung der zweiten axialen Segmentausnehmung bildet dabei die zweite Axialkontaktfläche 17 aus und die Begrenzung in Umfangsrichtung bildet eine zweite Endfläche 29 aus. Die zweite axiale Segmentausnehmung bildet allerdings nicht die zweite Tangentialkontaktfläche 19b aus, diese wird beispielsweise dadurch gebildet, dass das Ringsegment 14a am zweiten Segmentende SE2 radial außen tangential abgeschnitten ist. An dieser Stelle sei jedoch angemerkt, dass der Begriff tangential in Zusammenhang mit der ersten und zweiten Tangentialkontaktfläche 19a, 19b nicht zwangsläufig tangential im streng mathematischen Sinn bedeutet. Das bedeutet, dass der Verlauf der Tangentialkontaktflächen 19a, 19b nicht unbedingt eine Tangente einer Krümmung wie z.B. des Innendurchmessers Di oder Außendurchmessers Da bilden muss. Die ersten und zweiten Segmentausnehmungen können damit beispielsweise mittels eines geeigneten Fräsers hergestellt werden oder im Zuge eines Spritzgussverfahrens ausgespart werden.

Der Packungsring 14 wird im montierten Zustand so im Kompressor angeordnet, dass das erste axiale Ringende RE1 dem Kurbelgehäuse zugewandt ist, in dem der niedrige Druck P_{N} herrscht, der im Wesentlichen dem Umgebungsdruck entspricht (oder geringfügig höher sein kann) und dass das zweite axiale Ringende RE2 dem Zylinder zugewandt ist, in dem der relativ dazu höhere Druck P_{H} herrscht. Nachfolgend werden dafür auch die Begriffe Hochdruckseite und Niederdruckseite verwendet. Dabei sei angemerkt, dass sich bei Anordnung mehrerer Packungsringe 14 axial hintereinander in einer Abdichtungsvorrichtung 1 der Druck über die gesamte Abdichtungsvorrichtung 1 vom zylinderseitig hohen Druck P_{H} auf den relativ dazu niedrigen kurbelgehäuseseitigen Druck P_{N} abbaut. Das bedeutet, dass der Packungsring 14, der in axialer Richtung als erstes an den Zylinder angrenzt höheren Drücken ausgesetzt ist, als die nachfolgenden Packungsringe 14 in Richtung Kurbelgehäuse. Die Druckverhältnisse an den Packungsringen 14 einer Abdichtungsvorrichtung 1 unterscheiden sich also in der Regel.

Im montierten Neuzustand, wenn der Packungsring 14 noch keinen Verschleiß aufweist, sind im dargestellten Beispiel die einander in Umfangsrichtung zugewandten ersten und zweiten Verschleißbegrenzungsflächen 21, 22 angrenzender Ringsegmente 14a durch einen Verschleißabstand a voneinander beabstandet, wobei die Tangentialkontaktflächen 19a, 19b und die Axialkontaktflächen 16, 17 natürlich trotzdem aneinander anliegen, um die radiale und axiale Abdichtung des Packungsrings 14 zu erzeugen. Dieser Verschleißabstand a dient dazu, den Verschleiß, dem der Packungsring 14 im laufenden Betrieb an der radial inneren Innenumfangsfläche 18 unterliegt auszugleichen. An der radial äußeren Außenumfangsfläche 23 des Packungsrings 14 kann eine Umfangsnut 20 vorgesehen sein, die sich in Umfangsrichtung um den gesamten Packungsring 14 erstreckt. Die Umfangsnut 20 ist dazu vorgesehen, eine (nicht dargestellte) Schlauchfeder 11 aufzunehmen, die den Packungsring 14 radial verspannt und im montierten Zustand an der Kolbenstange 2 zu halten, wie anhand Fig.1 erläutert wurde.

Wenn ein Verschleiß an der Innenumfangsfläche 18 auftritt, sorgt die Schlauchfeder 11 in Kombination mit dem zylinderseitigen hohen Druck P_{H} dafür, dass sich der Packungsring 14 automatisch radial nachstellt, indem die einander zugewandten Tangentialkontaktflächen 19a, 19b der Ringsegmente 14a aneinander abgleiten, wie in Fig.3a durch die Pfeile an den Segmentenden SE1, SE2 angedeutet ist. Durch den Verschleiß verringert sich der Verschleißabstand a bis eine maximal mögliche Verschleißnachstellung erreicht ist, bei der der Verschleißabstand zu Null wird (a=0) und eine in Umfangsrichtung am Ende des zweiten Segmentendes SE2 eines Ringsegments 14a vorgesehene zweite Verschleißbegrenzungsfläche 21 an der ersten Verschleißbegrenzungsfläche 22 des ersten Segmentendes SE1 eines in Umfangsrichtung angrenzenden Ringsegments 14a anliegt.

Erfindungsgemäß ist an zumindest einem Ringsegment 14a, vorzugsweise aber an allen Ringsegmenten 14a, zumindest eine Entlastungsöffnung 25 vorgesehen, die sich von der radial innenliegenden Innenumfangsfläche 18 des jeweiligen Ringsegmentes 14a des Packungsrings 14 bis zur radial außenliegenden Außenumfangsfläche 23 und/oder bis zum zweiten axialen Ringende RE2 des jeweiligen Ringsegmentes 14a des Packungsrings 14 erstreckt, wobei zumindest ein, an die radial innenliegende Innenumfangsfläche 18 des Ringsegments 14a angrenzender Abschnitt der zumindest einen Entlastungsöffnung 25 in Richtung des ersten axialen Ringendes RE1 geneigt oder gekrümmt ist. Vorzugsweise sind aber mehr als eine Entlastungsöffnung 25 je Ringsegment 14a vorgesehen, beispielsweise drei Entlastungsöffnungen 25 je Ringsegment 14a, so wie in Fig.2 dargestellt ist. Die Entlastungsöffnungen 25 sind also durchgehende Ausnehmungen, die die innenliegende Innenumfangsfläche 18 mit der radial außenliegenden Außenumfangsfläche 23 und/oder dem zweiten axialen Ringende RE2 verbinden. Die Entlastungsöffnungen 25 münden also nicht wie bisher im Stand der Technik in eine umlaufende Umfangsnut an der innenliegende Innenumfangsfläche 18, sondern direkt in die innenliegende Innenumfangsfläche 18.

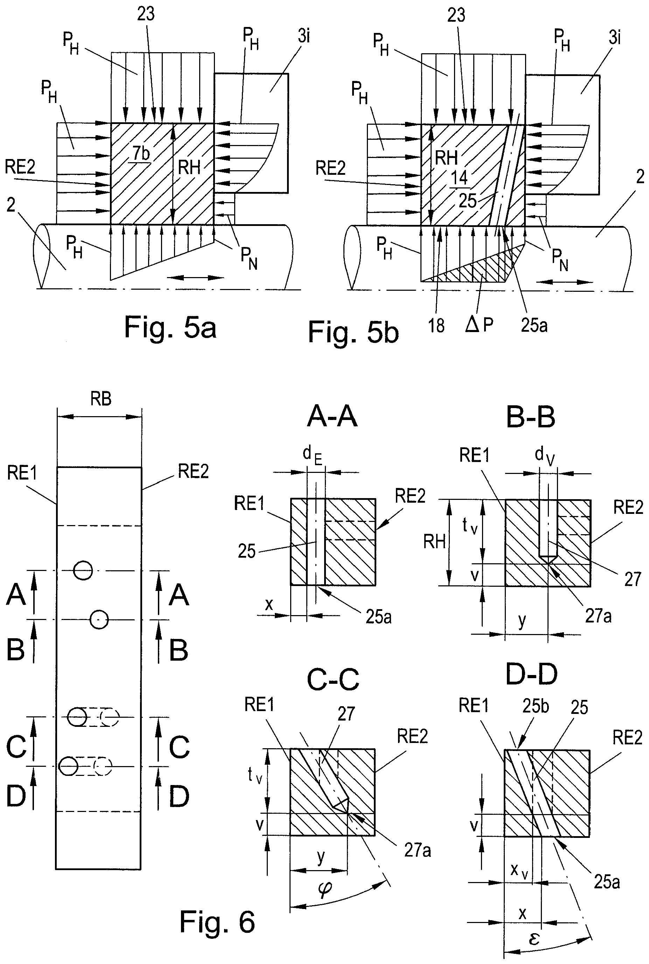

Die Entlastungsöffnungen 25 dienen grundsätzlich dazu, die Druckverhältnisse, die im Betrieb des Kompressors am Packungsring 14 zwischen der, dem Zylinder zugewandten Hochdruckseite des Packungsrings 14 (zweites axiales Ringende RE2) und der dem Kurbelgehäuse zugewandten Niederdruckseite des Packungsrings 14 (erstes axiales Ringende RE1) herrschen, gezielt zu beeinflussen, wie nachfolgend anhand Fig.5a+5b noch näher erläutert wird. Durch das erfindungsgemäße Merkmal, wonach zumindest ein, an die radial innenliegende Innenumfangsfläche 18 des Ringsegments 14a angrenzender Abschnitt der zumindest einen Entlastungsöffnung 25 in Richtung des ersten axialen Ringendes RE1 geneigt ist, kann der Druckausgleich zusätzlich an den radialen Verschleiß des Packungsrings 14 angepasst werden, wie nachfolgend noch im Detail erläutert wird.

Die Entlastungsöffnungen 25 weisen jeweils ein erstes Entlastungsöffnungsende 25a auf, das in die radial innenliegende Innenumfangsfläche 18 des jeweiligen Ringsegmentes 14a des Packungsrings 14 mündet. Die in die radial innenliegende Innenumfangsfläche 18 mündenden Entlastungsöffnungsenden 25a zweier benachbarter Entlastungsöffnungen 25 sind in Umfangsrichtung in einem Entlastungsöffnungsumfangsabstand z voneinander beabstandet angeordnet. Das bedeutet, dass die Entlastungsöffnungsenden 25a an der radial innenliegende Innenumfangsfläche 18 nicht miteinander verbunden sind. In Umfangrichtung zwischen zwei benachbarten Entlastungsöffnungsende 25a erstreckt sich somit die Innenumfangsfläche 18 des Ringsegments 14a. Der Entlastungsöffnungsumfangsabstand z beträgt in Abhängigkeit von der Größe des Ringsegments 14a vorzugsweise 1mm bis 15mm, besonders bevorzugt 1-10mm beträgt, beispielsweise 2, 3, 4, 5, 6, 7, 8, 9, 10, 11, 12, 13, 14 mm. Auch dazwischenliegende Abstände sind natürlich möglich, beispielsweise 1,5mm, 2,5mm, 3,5mm, 4,5mm, 5,5mm, etc. Der Entlastungsöffnungsumfangsabstand z wird dabei nicht von Mitte Entlastungsöffnungsende 25a bis Mitte Entlastungsöffnungsende 25a gemessen, sondern gibt den Abstand in Umfangsrichtung zwischen den Begrenzungen der Entlastungsöffnungsende 25a an, oder anders ausgedrückt die Länge der Innenumfangsfläche 18 in Umfangsrichtung zwischen den benachbarten Entlastungsöffnungsenden 25a. Die Entlastungsöffnungsumfangsabstände z zwischen den Entlastungsöffnungsenden 25a der Entlastungsöffnungen 25 eines Ringsegments 14a müssen dabei aber nicht zwingend gleich sein.

Die Entlastungsöffnungsenden 25a sind vorzugsweise vom ersten axialen Ringende RE1 in einem Entlastungsöffnungsaxialabstand x beabstandet angeordnet, der vorzugsweise 4% bis 40%, vorteilhafterweise 4-30%, besonders bevorzugt 4-20%, ganz besonders bevorzugt 4-15%, insbesondere maximal 10% der axialen Ringbreite RB beträgt, wie in Fig.2 und im Detail in Fig.6 Schnitt D-D dargestellt ist. In axialer Richtung zwischen einem Entlastungsöffnungsende 25a und dem ersten axialen Ringende RE1erstreckt sich somit die Innenumfangsfläche 18 des Ringsegments 14a. Der Entlastungsöffnungsaxialabstand x wird ebenfalls nicht von der Mitte eines Entlastungsöffnungsendes 25a weg gemessen, sondern wieder von der Begrenzung des Entlastungsöffnungsendes 25a, oder anders ausgedrückt als Länge der Innenumfangsfläche 18 in axialer Richtung zwischen dem Entlastungsöffnungsende 25a und dem ersten axialen Ringende RE1. Die Entlastungsöffnungsradialabstände x der einzelnen Entlastungsöffnungsenden 25a der Entlastungsöffnungen 25 eines Ringsegments 14a müssen dabei aber nicht zwingend gleich sein. Die axiale Ringbreite RB erstreckt sich dabei zwischen dem ersten und zweiten axialen Ringende RE1, RE2. Details zur Ausgestaltung einer Entlastungsöffnung 25 werden nachfolgend anhand Fig.6 noch im Detail erläutert. Wie in Fig.2 ersichtlich, ist die axiale Entlastungsöffnungsbreite der Entlastungsöffnungen 25, zumindest an den Entlastungsöffnungsenden 25a, klein im Verhältnis zur Ringbreite RB. Bei kreisrundem Querschnitt der Entlastungsöffnungen 25 (zumindest an den Entlastungsöffnungsenden 25a) entspricht die axiale Entlastungsöffnungsbreite dem Durchmesser. Die axiale Entlastungsöffnungsbreite der Entlastungsöffnungsenden 25a beträgt vorzugsweise 2%-30% der Ringbreite RB, vorzugsweise 2-25%, besonders bevorzugt maximal 20%, insbesondere maximal 15%. Allgemein liegen die Entlastungsöffnungsenden 25a nicht zentral zwischen den beiden axialen Ringende RE1, RE2 des Packungsrings 14, sondern näher am ersten axialen Ringende RE1, als am zweiten axialen Ringende RE2. Das erste axiale Ringende RE1 ist im montierten Zustand der Niederdruckseite zugewandt.

Die weiteren, zusätzlich zur zumindest einen geneigten Entlastungsöffnung 25 in den Figuren, insbesondere Fig.2 bis 4b, dargestellten Merkmale, insbesondere der vollständig gerade Verlauf einer Entlastungsöffnung 25, das Vorsehen einer oder mehrerer Verschleißöffnung/en 27, die Umfangsnut 20 oder die Axialnuten 24 sind optional und werden im nachfolgenden beschrieben. Die Ausgestaltung des Packungsrings 14 gemäß Fig.2 zeigt damit eine vorteilhafte Ausgestaltung mit mehreren voneinander unabhängigen Merkmalen. Gemäß der Erfindung wäre es ausreichend, wenn an zumindest einem Ringsegment 14a zumindest eine geneigte Entlastungsöffnung 25 vorgesehen ist.

Um die Struktursteifigkeit des Packungsrings 14 zu verbessern, kann an der Außenumfangsfläche 23 zumindest eines Ringsegments 14a, vorzugsweise jedes Ringsegments 14a, zumindest eine Axialnut 24 vorgesehen sein, die sich durchgehend in axialer Richtung vom ersten axialen Ringende RE1 (eventuell unterbrochen von der Umfangsnut 20) bis zum zweiten axialen Ringende erstreckt. Vorzugsweise sind allerdings mehrere Axialnuten 24 je Ringsegment 14a vorgesehen, beispielsweise drei Axialnuten 24 je Ringsegment 14a, so wie dargestellt. Im dargestellten Beispiel münden die Entlastungsöffnungen 25 an der Außenumfangsfläche 23 jeweils in einer Axialnut 24. Natürlich ist dies aber nicht zwingend notwendig und die Entlastungsöffnungen 25 könnten auch in Umfangsrichtung neben den Axialnuten 24 in die Außenumfangsfläche 23 des Packungsrings 14 münden (bzw. in die Umfangsnut 20).

Die Entlastungsöffnungen 25 in der gezeigten Ausführungsform sind jeweils in Form von schrägen zylindrischen Bohrungen ausgeführt, da diese besonders einfach spanend herstellbar sind und sind vollständig in Richtung des ersten axialen Ringendes RE1 geneigt. Natürlich könnten aber auch ein nicht-kreisrunder Querschnitt für eine oder mehrere Entlastungsöffnungen 25 vorgesehen werden und/oder ein nicht gerader Verlauf der Entlastungsöffnungen 25, was allerdings den Aufwand zur Herstellung der Entlastungsöffnungen 25 erhöht. Wesentlich für die Erfindung ist allerdings nur, dass zumindest ein, an die radial innenliegende Innenumfangsfläche 18 des Ringsegments 14a angrenzender Abschnitt der zumindest einen Entlastungsöffnung 25 in Richtung des ersten axialen Ringendes RE1 geneigt ist. Das bedingt folglich nicht zwangsweise einen vollständigen geraden und geneigten Verlauf der Entlastungsöffnung 25, sondern es würde grundsätzlich ausreichen, dass ein bestimmter Abschnitt der Entlastungsöffnung 25 ausgehend von der Innenumfangsfläche 18 geneigt ausgeführt ist. Der daran anschließende Abschnitt könnte beispielsweise gerade, also parallel zu den axialen Ringenden RE1, RE2 ausgehführt sein und/oder sich bis zum zweiten axialen Ringende RE2 erstrecken (da auch dort der hohe Druck P_{H} anliegt.

Die Entlastungsöffnungen 25 weisen aber vorzugsweise einen vollständig geraden Verlauf auf, sodass sie möglichst einfach hergestellt werden können, z.B. mittels eines zylindrischen Bohrers oder Fräsers. Natürlich wären aber auch andere Herstellungsverfahren denkbar, beispielsweise könnten die Entlastungsöffnungen 25 direkt mittels eines Spritzgussverfahrens hergestellt werden, insbesondere im Zuge des Spritzgussverfahrens im Ringsegment 14a integriert werden, ohne, dass z.B. ein nachträgliches Bohren erforderlich ist. Denkbar wäre auch, dass der Packungsring 14 mittels eines additiven Fertigungsverfahrens wie z.B. 3-D Druck hergestellt wird, wobei die Entlastungsöffnungen 25 wiederum direkt während der Herstellung berücksichtigt werden können.

Wie die Entlastungsöffnungen 25 hergestellt werden spielt aber für die Erfindung keine Rolle, wesentlich ist, dass die geforderten Randbedingungen der Entlastungsöffnungen 25 hinsichtlich der Neigung in Richtung des ersten axialen Ringendes RE1 eingehalten werden. In der einfachsten Ausgestaltung kann/können die Entlastungsöffnung/en 25 beispielsweise so wie in Schnitt D-D der Fig.6 dargestellt ist, verlaufen. Dabei ist nicht nur ein, an die radial innenliegende Innenumfangsfläche 18 des Packungsrings 14 angrenzender Abschnitt der zumindest einen Entlastungsöffnung 25 in Richtung des ersten axialen Ringendes RE1 geneigt, sondern die gesamte Entlastungsöffnung 25 ist um einen ersten Entlastungsöffnungswinkel ε geneigt, so wie auch im dargestellten Beispiel in den Fig.2 angedeutet ist. Details dazu werden nachfolgend anhand Fig.6 noch näher erläutert. Durch die erfindungsgemäße Neigung der Entlastungsöffnung 25 können die Druckverhältnisse am Packungsring 14 während der Lebensdauer des Packungsringes 14 gezielt beeinflusst werden. Insbesondere kann der Druckausgleich des Packungsrings 14 an den radialen Verschleiß angepasst werden. Im einfachsten Fall ist die entsprechenden Entlastungsöffnung 25 als zylindrische Bohrung ausgeführt, wobei die Bohrungsachse zum ersten axialen Ringende RE1 hin geneigt ist. Das in die radiale außenliegende Außenumfangsfläche 23 mündende zweite Entlastungsöffnungsende 25b liegt dadurch näher am ersten axialen Ringende RE1 als das in die radial innenliegende Innenumfangsfläche 18 mündende erste Entlastungsöffnungsende 25a der Entlastungsöffnung 25. Durch den schrägen Verlauf "wandert" das erste Entlastungsöffnungsende 25a bei radialem Verschleiß des Ringsegments 14a im Wesentlichen in Richtung des ersten axialen Ringendes RE1, wodurch der Druckausgleich des Packungsrings 14 in Abhängigkeit des Verschleißes erhöht wird, da der hohe Druck P_{H} an der Innenumfangsfläche 18 in axialer Richtung näher an das erste axiale Ringende RE1 herangeführt wird. Das bedeutet im Wesentlichen, je höher der Verschleiß des Ringsegments 14a ist, desto höher ist auch der Druckausgleich. Dadurch wird die radiale Anpresskraft des Packungsrings 14 im Betrieb an die Kolbenstange 2 reduziert und die Lebensdauer des Packungsringes 14 erhöht.

Um den Druck an der radiale innenliegenden Innenumfangsfläche 18 in Umfangsrichtung besser zu verteilen, könnten eine oder mehrere Entlastungsöffnungen 25 beispielsweise auch in eine Art Ausfräsung/Nut in der radiale innenliegenden Innenumfangsfläche 18 enden, die sich in Umfangsrichtung über einen relativ kleinen Bereich erstreckt. Die ersten Entlastungsöffnungsenden 25a würden in diesem Fall nicht mehr den vorzugsweise kreisrunden Querschnitt der restlichen Entlastungsöffnung 25 (radial zwischen Ausfräsung/Nut und äußerer Außenumfangsfläche 23 und/oder zweitem axialen Ringende RE2) aufweisen, sondern würden durch die entsprechende Form der Ausfräsung/Nut ausgebildet sein. Der Entlastungsöffnungsumfangsabstand z in Umfangsrichtung und der Entlastungsöffnungsaxialabstand x in axialer Richtung würden sich dann von der jeweiligen Begrenzung der Ausfräsung/Nut in axialer Richtung und in Umfangsrichtung bemessen. Statt einer Ausfräsung/Nut könnte z.B. auch eine Art Langloch vorgesehen werden. Allgemein weisen die Entlastungsöffnungen 25 zumindest an ihren Entlastungsöffnungsenden 25a eine Entlastungsöffnungslänge in Umfangsrichtung auf, die vorzugsweise 2-100% der axialen Ringbreite RB des Packungsrings 14 beträgt, vorzugsweise 2-50%, insbesondere maximal 25% der axialen Ringbreite RB. Allgemein ist es wesentlich, dass die Entlastungsöffnungsenden 25a an der radial innenliegenden Innenumfangsfläche 18 nicht durch eine im Betrieb für den Druckausgleich vorgesehene Umfangsnut miteinander verbunden sind. Eine Umfangsnut würde nämlich insbesondere in Verbindung mit einem geringen Entlastungsöffnungsaxialabstand x dazu führen, dass am ersten axialen Ringende RE1 eine schmale Flanke aus Ringmaterial ausgebildet wird. Diese Flanke würde im Betrieb zu Schwingungen angeregt werden, was zu ungleichmäßigem Verschleiß und zu unerwünschten Undichtigkeiten führen würde.

Zusätzlich zur zumindest einen erfindungsgemäßen zumindest abschnittsweise geneigten Entlastungsöffnung 25 können natürlich auch eine oder mehrere Entlastungsöffnungen 25 vorgesehen werden, die keine Neigung in Richtung des ersten axialen Ringendes RE1 aufweisen. Eine solche Entlastungsöffnung 25 ist z.B. in Schnitt A-A in Fig.6 dargestellt und verläuft im Wesentlichen parallel zu den beiden axialen Ringenden RE1, RE2. Der Druckausgleich bleibt damit im Wesentlichen konstant, verändert sich also (im Gegensatz zur geneigten Entlastungsöffnung 25) nicht in Abhängigkeit des radialen Verschleißes des Packungsrings 14. Details dazu werden noch näher anhand Fig.6 erläutert.

Gemäß einer weiteren vorteilhaften Ausgestaltung der Erfindung ist an zumindest einem Ringsegment 14a des Packungsringes 14, vorzugsweise an jedem Ringsegment 14a, zusätzlich zumindest eine Verschleißöffnung 27 vorgesehen, die sich von der radial außenliegenden Außenumfangsfläche 23 und/oder dem zweiten axialen Ringende RE2 des Packungsrings 14 über einen Teil der Ringhöhe RH in Richtung der radial innenliegenden Innenumfangsfläche 18 des Packungsrings 14 erstreckt, aber sich im unverschlissenen Zustand des Ringsegmentes 14a nicht bis zur Innenumfangsfläche 18 des Ringsegmentes 14a erstreckt. Im Falle einer Bohrung wäre die Verschleißöffnung 27 beispielsweise als von der Außenumfangsfläche 23 ausgehende Sackbohrung in Richtung der Innenumfangsfläche 18 ausgeführt. Natürlich könnte die als Bohrung ausgeführte Verschleißöffnung 27 auch zusätzlich oder alternativ ausgehend vom zweiten axialen Ringende RE2 in Richtung der Innenumfangsfläche 18 gebohrt werden. Wesentlich für die Verschleißöffnung 27 ist (unabhängig von deren Ausgestaltung), dass ein, der Innenumfangsfläche 18 in radialer Richtung am weitesten zugewandtes Verschleißöffnungsende 27a (siehe Fig.6) der zumindest einen Verschleißöffnung 27, in einem Abstand in radialer Richtung des Ringsegments 14a von der radial innenliegenden Innenumfangsfläche 18 des Ringsegments 14a beabstandet ist, der höchstens 40% der Ringhöhe RH beträgt, vorzugsweise höchstens 30%, besonders bevorzugt höchstens 20%. Die Ringhöhe RH erstreckt sich dabei zwischen der außenliegenden Außenumfangsfläche 23 und der radial innenliegenden Innenumfangsfläche 18 des Packungsrings 14, entspricht also im Wesentlichen der halben Differenz zwischen dem Innendurchmesser Di und dem Außendurchmesser Da des Packungsrings 14, wie in Fig.4a gezeigt ist. Wesentlich ist, dass das Verschleißöffnungsende 27a zwischen dem ersten und dem zweiten axialen Ringende RE1, RE2 liegt und vom ersten und zweiten axialen Ringende RE1, RE2 beabstandet ist. Das bedeutet, dass das Verschleißöffnungsende 27a sowohl in axialer Richtung, als auch in Umfangsrichtung gesehen von Ringmaterial umgeben ist, sodass es erst bei einem entsprechenden radialen Verschleiß freigelegt wird.

Vorzugsweise sind allerdings, so wie in Fig.2-4 dargestellt, an einem Ringsegment 14a über den Umfang mehrere Verschleißöffnungen 27 vorgesehen, besonders bevorzugt zumindest zwei Verschleißöffnung 27 je Ringsegment 14a. Im dargestellten Beispiel verlaufen die Verschleißöffnungen 27 ausgehend von der Außenumfangsfläche 23 bzw. hier von der an der der Außenumfangsfläche 23 angeordneten Außenumfangsnut 20 in radialer Richtung des Packungsrings 14 (parallel zu den axialen Ringenden RE1, RE2) in Richtung der Innenumfangsfläche 18, ohne die Innenumfangsfläche 18 zu erreichen und sind als zylindrische Bohrungen ausgeführt.

Wenn die Verschleißöffnungen 27 gebohrt werden, können sie, so wie dargestellt, entsprechend des verwendeten Bohrers einen konischen Grund aufweisen. Wenn die Verschleißöffnungen 27 z.B. mittels eines Fräsers gefräst werden, weisen sie in der Regel einen im Wesentlichen ebenen Grund auf. Natürlich wären aber auch wiederum andere Herstellungsmöglichkeiten denkbar, wie Spritzguss oder additive Fertigung.

Die Länge und der Durchmesser der Verschleißöffnungen 27 hängt im Wesentlichen von einem gewünschten Druckausgleichsverhalten des Packungsrings 14 ab, wobei die Länge, bzw. die Erstreckung in radialer Richtung so bemessen wird, dass das Verschleißöffnungsende 27a der Verschleißöffnung 27 höchstens 40% der radialen Ringhöhe RH des Packungsrings 14 von der Innenumfangsfläche 18 beabstandet ist. Im dargestellten Beispiel in Fig.2-4 sind die Verschleißöffnungen 27 in axialer Richtung zentral zwischen den beiden Ringenden RE1, RE2 angeordnet. Sie könnten aber auch näher an einem Ringende RE1, RE2 angeordnet sein, vorzugsweise in einem Verschleißöffnungsaxialabstand y vom ersten axialen Ringende RE1 beabstandet, der 2% bis 20% der Ringbreite RB beträgt, vorzugsweise 2-15%, insbesondere maximal 10% wie anhand Fig.6 noch näher erläutert wird. Die konkrete axiale Anordnung hängt im Wesentlichen vom gewünschten zu erreichenden Druckausgleich des Packungsrings 14 ab.

Die zumindest eine Verschleißöffnung 27, bzw. die vorzugsweise mehreren Verschleißöffnungen 27, eines Ringsegments 14a sind so bemessen, dass ab einem bestimmten Verschleißzustand des Packungsrings 14 ein, der Innenumfangsfläche 18 zugewandtes radial inneres Verschleißöffnungsende 27a (siehe Fig.2 und insbesondere Fig.6) freigelegt wird. Dadurch erstrecken sich die Verschleißöffnungen 27 ab diesem Verschleißzustand vollständig von der Außenumfangsfläche 23 bis zur Innenumfangsfläche 18. Ab diesem Verschleißzustand wirken die Verschleißöffnungen 27 folglich so wie die (nicht geneigten) Entlastungsöffnungen 25. Insbesondere erhöhen die Verschleißöffnungen 27 dann im Betrieb des Kompressors den Druckausgleich zwischen der Innenumfangsfläche 18 und der Außenumfangsfläche 23 des Packungsrings 14, wodurch beispielsweise ein frühzeitiges ungewünschtes Kollabieren des Packungsrings 14 vermieden werden kann.

Die Verschleißöffnung/en 27 kann/können sich aber auch ausgehend vom zweiten axialen Ringende RE2 in Richtung der Innenumfangsfläche 18 erstrecken, analog der Entlastungsöffnungen 25, da auch am zweiten axialen Ringende RE2 der hohe Druck P_{H} anliegt (z.B. gestrichelt in Schnitt B-B in Fig.6 angedeutet).

Beispielsweise können die Verschleißöffnungen 27 so dimensioniert werden, dass ab dem Verschleißzustand, bei dem die Verschleißöffnungen 27 an der Innenumfangsfläche 18 freigelegt werden, ein im Wesentlichen vollständiger Druckausgleich zwischen der Innenumfangsfläche 18 und der Außenumfangsfläche 23 erfolgt. Dadurch würde der Packungsring 14 zwar seine Dichtwirkung zum Teil verlieren, es kann dafür aber die Gefahr einer Zerstörung verringert, insbesondere vermieden werden. Unter einem vollständigen Druckausgleich ist hier zu verstehen, dass sich die druckbedingt auf die Außenumfangsfläche 23 und auf die Innenumfangsfläche 18 wirkenden radialen Kräfte im Wesentlichen vollständig ausgleichen, sodass in radialer Richtung im Wesentlichen keine, durch eine Druckdifferenz bedingte Kraft mehr auf den Packungsring 14 wirkt. Das bedeutet im Wesentlichen, dass sich ein Packungsring 14 ab einem bestimmten Verschleißzustand selbst deaktiviert. Dazu ist vorzugsweise vorgesehen, dass ein oder mehrere andere Packungsringe 14 der Abdichtungsvorrichtung 1, die einen geringeren Verschleiß aufweisen können, ihre Dichtwirkung noch im Wesentlichen normal entfalten. Der oder die deaktivierten Packungsringe 14 müssen damit nicht sofort getauscht werden, was zu einem Stillstand des Kompressors führen würde, sondern es könnten vorgegebene Wartungsintervalle leichter eingehalten werden, z.B. ab einer gewissen Leckagemenge, welche messtechnisch erfasst werden kann.

Ähnlich wie bei der/den erfindungsgemäßen Entlastungsöffnung/en 25 kann es vorteilhaft sein, wenn zumindest ein, der radial innenliegende Innenumfangsfläche 18 zugewandter Endabschnitt zumindest einer Verschleißöffnung 27 in Richtung des ersten axialen Ringendes RE1 geneigt ist, beispielsweise um einen Verschleißöffnungswinkel ϕ , wie nachfolgend anhand Fig.6 noch näher erläutert wird. Auch in diesem Fall kann damit das Druckausgleichsverhalten über den Verschleiß angepasst werden. Vorzugsweise sind die Verschleißöffnungen 27 in Umfangsrichtung jeweils zwischen zwei Entlastungsöffnungen 25 angeordnet, besonders bevorzugt zentral zwischen zwei Entlastungsöffnungen 25.

In Fig.3a ist der in Fig.2 dargestellte Packungsring 14 in einer Draufsicht normal auf das erste axiale Ringende RE1 bzw. die vorzugsweise ebene erste Ringendfläche dargestellt, welche im montierten Zustand der Niederdruckseite zugewandt ist. Fig.3b zeigt ein einzelnes Ringsegment 14a des Packungsrings 14 gemäß Fig.3a. In Fig.3b ist die Form der ersten axialen Segmentausnehmung erkennbar, die am ersten Segmentende SE1 des Ringsegments 14a angeordnet ist, um die erste Tangentialkontaktfläche 19a und die erste Axialkontaktfläche 16 auszubilden. Wie bereits beschrieben erstreckt sich die erste axiale Segmentausnehmung 16 vom ersten axialen Ringende RE1 axial teilweise in Richtung des gegenüberliegenden zweiten axialen Ringendes RE2, sodass das zweite Segmentende SE2 eines in Umfangsrichtung daran anschließenden Ringsegments 14a in die erste axiale Segmentausnehmung eingreifen kann. Benachbarte Ringsegmente 14a überlappen also in Umfangsrichtung teilweise, sodass die ersten Tangentialkontaktflächen 19a der ersten Segmentenden SE1 der Ringsegmente 14a an den zweiten Tangentialkontaktflächen 19b der zweiten Segmentenden SE1 eines benachbarten Ringsegments 14a anliegen um die radiale Abdichtung des Packungsrings 14 zu erzeugen. Analog liegen die durch die jeweils erste axiale Segmentausnehmung gebildeten ersten Axialkontaktflächen 16 der ersten Segmentenden SE1 der Ringsegmente 14a an den durch die jeweils zweite axiale Segmentausnehmung gebildeten zweiten Axialkontaktflächen 17 der zweiten Segmentenden SE2 an, um die axiale Abdichtung des Packungsrings 14 zu erzeugen. Die erste axiale Segmentausnehmung und die zweite axiale Segmentausnehmung sind an in Umfangsrichtung gegenüberliegenden Segmentenden SE1, SE2 eines Ringsegments 14a und an den gegenüber liegenden axialen Ringende RE1, RE2 angeordnet.

Die Segmentenden SE1, SE2 wirken dabei in Umfangsrichtung so zusammen, dass die Tangentialkontaktflächen 19a, 19b einander zugewandt sind und aneinander gleiten können. Dadurch wird im Betrieb die Verschleißnachstellung des Packungsrings 14 ermöglicht, bis der Verschleißabstand a (siehe Fig.2+3a) zwischen der zweiten Verschleißbegrenzungsfläche 21 des zweiten Segmentendes SE2 eines Ringsegments 14a an der ersten Verschleißbegrenzungsfläche 22 der ersten axialen Segmentausnehmung des ersten Segmentendes SE1 des benachbarten Ringsegments 14a anliegt. Am zweiten Segmentende SE2 des Ringsegments 14a ist vorzugsweise am Übergang zwischen der zweiten Tangentialkontaktfläche 19b und der zweiten Verschleißbegrenzungsfläche 21 eine Außenrundung R2 mit einem bestimmten Radius vorgesehen, um die Verschleißnachstellung bzw. insbesondere das aneinander Gleiten der Tangentialkontaktfläche 19a, 19b zu begünstigen. Vorteilhafterweise ist am ersten Segmentende SE1 analog dazu eine Innenrundung R1 zwischen der ersten Tangentialkontaktfläche 19a und der ersten Verschleißbegrenzungsfläche 22 vorgesehen, so wie in Fig.3b und 4b dargestellt ist.

Die Verschleißöffnungen 27 sind hier als Sacklochbohrungen mit konischem Grund ausgeführt und erstrecken sich von der Außenumfangsfläche 23, hier der Grund der Umfangsnut 20, radial über einen Teil der Ringhöhe RH in Richtung der Innenumfangsfläche 18, wobei die Verschleißöffnungsenden 27a der Verschleißöffnungen 27 jeweils in einem Abstand in radialer Richtung des Ringsegments 14a von der radial innenliegenden Innenumfangsfläche 18 beabstandet sind, der höchstens 40% der radialen Ringhöhe RH des Packungsrings 14 beträgt. Im dargestellten Packungsring 14 sind drei geneigte Entlastungsöffnungen 25 und zwei Verschleißöffnungen 27 je Ringsegment 14a vorgesehen. Die Verschleißöffnungen 27 sind hier in Umfangsrichtung zentral zwischen den Entlastungsöffnungen 25 angeordnet. Die Verschleißöffnungen 27 verlaufen hier in radialer Richtung des Packungsrings 14 (parallel zu den axialen Ringenden RE1, RE2) und die Entlastungsöffnungen 25 sind erfindungsgemäß schräg ausgeführt, sind also in Richtung des ersten axialen Ringendes RE1 geneigt, um den Druckausgleich in Abhängigkeit vom Verschleiß zu erhöhen. Natürlich ist diese Ausgestaltung aber nur beispielhaft zu verstehen, die genaue konstruktive Ausführung, sowie die Anzahl und Ausrichtung der Entlastungsöffnungen 25 und/oder der Verschleißöffnungen 27 ist natürlich dem Fachmann überlassen und richtet sich nach dem gewünschten Einsatzgebiet des Packungsrings 14 und dem zu erzielenden Effekt, insbesondere einem zu erreichenden Druckausgleich. Wesentlich für die Erfindung ist, dass an zumindest einem Ringsegment 14a zumindest eine Entlastungsöffnung 25 vorgesehen ist, wobei zumindest ein, an die radial innenliegende Innenumfangsfläche 18 des Ringsegments 14a angrenzender Abschnitt der Entlastungsöffnung 25 in Richtung des ersten axialen Ringendes RE1 geneigt ist.

Fig.4a und Fig.4b zeigen den Packungsring 14 bzw. ein einzelnes Ringsegment 14a des Packungsrings 14 in Draufsicht auf das zweite axiale Ringende RE2, das im eingebauten Zustand der Hochdruckseite des Kompressors zugewandt ist. Insbesondere in Fig.4b ist die zweite axiale Segmentausnehmung erkennbar, die am zweiten Segmentende SE2 eines Ringsegments 14a vorgesehen ist, um die zweite Axialkontaktfläche 17 auszubilden. Die zweite Tangentialkontaktfläche 19b ist in radialer Richtung außen am zweiten Segmentende SE2 vorgesehen. Die zweite axiale Segmentausnehmung erstreckt sich teilweise vom zweiten axialen Ringende RE2, insbesondere von einer daran vorgesehenen vorzugsweise ebenen zweiten Ringendfläche 28, axial in Richtung des ersten axialen Ringendes RE1, insbesondere der ersten ebenen Ringendfläche. Die zweite axiale Segmentausnehmung bildet neben der zweiten Axialkontaktfläche 17 zudem eine zweite Endfläche 29 des zweiten Segmentendes SE2 aus, die von einer ersten Endfläche 30 des ersten Segmentendes SE1 benachbarten Ringsegments 14a in einem Segmentabstand b beabstandet ist, wie in Fig.4a gezeigt ist. Durch das Zusammenwirken benachbarter Segmentenden SE1, SE2 wird damit eine, den Packungsring 14 radial vollständig durchdringende und axial begrenzte Radialausnehmung 31 geschaffen, deren Breite dem Segmentabstand b entspricht. Bei fortlaufendem Verschleiß des Packungsrings 14 verringert sich der Segmentabstand b in analoger Weise wie der Verschleißabstand a (siehe Fig.2 + 3a), so lange, bis der Verschleißabstand a zu Null wird (dabei gilt b > a). Bei gleicher Größe a=b im unverschlissenen (Neu-)Zustand des Packungsrings 14 wird der Verschleißabstand a im dargestellten Beispiel aus kinematischen Gründen bei fortschreitendem Verschleiß früher zu Null als der Segmentabstand b. Das hängt im Wesentlichen von der konkreten konstruktiven Ausgestaltung, insbesondere von der Anordnung der Tangentialkontaktflächen 19a, 19b ab. Alternativ könnten aber auch die Endflächen 29, 30 als Verschleißbegrenzung genutzt werden (dabei gilt a > b).

Die Tangentialkontaktflächen 19a, 19b könnten sich beispielsweise aber auch durchgehend von der Außenumfangsfläche 23 bis zur Innenumfangsfläche 18 erstrecken. Dadurch wäre die Verschleißnachstellung im Wesentlichen nicht mehr durch den Verschleißabstand a begrenzt, so wie bisher dargestellt. Die am ersten Segmentende SE1 vorgesehene erste axiale Segmentausnehmung würde folglich keine erste Verschleißbegrenzungsfläche 22 mehr aufweisen und das zweite Segmentende SE2 würde keine zweite Verschleißbegrenzungsfläche 21 mehr aufweisen. Eine Begrenzung der Verschleißnachstellung könnte in diesem Fall beispielsweise durch die Radialausnehmung 31 am zweiten axialen Ringende RE2 geschaffen werden, deren Breite dem Segmentabstand b entspricht, wie anhand Fig.4a gezeigt wurde.

Natürlich kann auch das Material und die Oberflächenbeschaffenheit des Packungsrings 14 verändert werden, um ein möglichst optimales Ergebnis in einer Anwendung zu erhalten. Gemäß einer vorteilhaften Ausgestaltung ist der Packungsring 14 aus einem geeigneten tribologisch optimierten Material hergestellt, beispielsweise aus einem Polytetrafluorethylen (PTFE)-Verbundstoff. Die Herstellung könnte beispielsweise durch spanende Fertigung erfolgen, durch Spritzguss oder aber auch durch additive Verfahren wie z.B. 3D-Druck.

In Fig.5a sind die Druckverhältnisse an einem ein herkömmlicher Packungsring 7b (siehe Fig.1) im Betrieb des Kompressors vereinfacht schematisch anhand eines Längsschnitts dargestellt. In Fig. 5b sind im Vergleich dazu die Druckverhältnisse an einem Packungsring 14 gemäß der Erfindung dargestellt. Der Packungsring 14 ist vorzugsweise in einer (nicht dargestellten) Abdichtungsvorrichtung 1 angeordnet, die z.B. im Kurbelgehäuse eines Kompressors angeordnet ist, um die Kolbenstange 2 abzudichten (wie z.B. in Fig.1). Die Packungsringe 7b, 14 sind so angeordnet, dass das jeweils erste axiale Ringende RE1 der Niederdruckseite zugewandt ist (kurbelgehäuseseitig) und das jeweils zweite axiale Ringende RE2 der Hochdruckseite zugewandt ist (zylinderseitig). Die Packungsringe 7b, 14 sind so angeordnet, dass das jeweils erste axiale Ringende RE1 an einem Gehäusesegment 3i der Abdichtungsvorrichtung 1 anliegt, um eine Abdichtung in radialer Richtung zwischen dem ersten axialen Ringende RE1 und dem Gehäusesegment 3i zu erzeugen. Die Abdichtung entspricht einer im Wesentlichen statischen Abdichtung, da zwischen dem ersten axialen Ringende RE1 des Packungsrings 14 und dem Gehäusesegment 3i keine oder nur eine sehr geringe Relativbewegung vorliegt.

Dabei liegt an der radial außenliegenden Außenumfangsfläche 23 der hohe Druck P_{H} an und an der radial innenliegenden Innenumfangsfläche 18 am ersten axialen Ringende RE1 liegt der relativ dazu niedrigere Druck P_{N} an. Der hohe Druck P_{H} verringert sich in radialer Richtung auf den niedrigen Druck P_{N}, wobei der Druckverlauf im dargestellten Beispiel einen nichtlinearen Verlauf aufweist. Am zweiten axialen Ringende RE2 liegt der hohe Druck P_{H} an und ist über die radiale Ringhöhe RH zwischen der radial außenliegenden Außenumfangsfläche 23 und der radial innenliegenden Innenumfangsfläche 18 im Wesentlichen konstant. An dieser Stelle sei angemerkt, dass sich der Druck an einer Abdichtungsvorrichtung 1 in axialer Richtung vom hohen Druck P_{H} im Zylinder auf den niedrigen Druck P_{N} im Kurbelgehäuse schrittweise über die jewelig vorgesehene Anzahl an Packungsringen 14 abbaut. Das bedeutet, dass sich die Druckverhältnisse an den Packungsringen 14 einer Abdichtungsvorrichtung 1 in der Regel natürlich unterscheiden. Der hohe Druck P_{H}, der an dem, dem Zylinder zugewandten ersten Packungsring 14 anliegt, entspricht deshalb nicht dem hohen Druck P_{H}, der am nachfolgenden Packungsring 14 anliegt usw. Der hohe Druck P_{H} und der niedrige Druck P_{N} in der Beschreibung beziehen sich also jeweils auf einen Packungsring 14. Näherungsweise entspricht der niedrige Druck P_{N} an einem Packungsring 14 dem hohen Druck P_{H} des jeweils axial (in Richtung Kurbelgehäuse) nachfolgenden Packungsrings 14 usw.

Analog dazu liegt an der radial außenliegenden Außenumfangsfläche 23 der hohe Druck P_{H} an, wobei der Druck im Wesentlichen über die axiale Ringbreite RB des Packungsrings 14 zwischen zweitem axialen Ringende RE2 und erstem axialen Ringende RE1 konstant ist. An der radial innenliegenden Innenumfangsfläche 18, welche im Betrieb an der translatorisch oszillierenden Kolbenstange 2 anliegt, erfolgt eine Abdichtung zwischen dem hohen Druck P_{H} am zweiten axialen Ringende RE2 (zylinderseitig) und dem relativ dazu niedrigeren Druck P_{N} am ersten axialen Ringende RE1 (kurbelgehäuseseitig). Dabei handelt es sich aufgrund der Relativbewegung zwischen (ortsfestem) Packungsring 14 und der translatorisch oszillierenden Kolbenstange 2 um eine dynamische Abdichtung. Wie in Fig.5a angedeutet, ergibt sich näherungsweise ein im Wesentlichen linearer Druckverlauf entlang der radial innenliegenden Innenumfangsfläche 18, wobei sich der Druck vom hohen Druck P_{H} (am zweiten axialen Ringende RE2) auf den niedrigen Druck P_{N} (am ersten axialen Ringende RE1) verringert. Grundsätzlich ist der Druckabfall an der Innenumfangsfläche 18 in axialer Richtung aufgrund der Kompressibilität des gasförmigen Mediums zwar ebenfalls nichtlinear, in gewissen Fällen (z.B. geringer Druckunterschied zwischen hohem Druck P_{H} und niedrigem Druck P_{N} bei hohen Absolutdrücken) kann der Druckverlauf allerdings der Einfachheit halber durch eine lineare Funktion gut angenähert werden, so wie dargestellt. Das bedeutet im gezeigten Beispiel in Fig.5a, dass der Packungsring 7b aufgrund der größeren radialen Druckdifferenz im Vergleich zum erfindungsgemäßen Packungsring 14 radial stärker an die Kolbenstange 2 gepresst wird, was zu einem höheren Verschleiß führt und damit nachteilig ist. Zusätzlich wird der Packungsring 7b der Fig.5a im Bereich des ersten axialen Ringendes RE1 wegen der im Vergleich zum zweiten axialen Ringende RE2 größeren radialen Druckdifferenz stärker an die Kolbenstange 2 gedrückt, als am zweiten axialen Ringende RE2. Diese ungleichmäßige Druckverteilung kann unter Umständen zusätzlich zu einem ungleichmäßigen Verschleiß führen, was ebenfalls nachteilig ist.

In Fig.5b ist ein Schnitt durch einen erfindungsgemäßen Packungsring 14 dargestellt, wobei die Schnittdarstellung im Bereich einer Entlastungsöffnung 25 verläuft, die hier als zylindrische Bohrung ausgeführt ist und in Richtung des ersten axialen Ringendes RE1 des Packungsrings 14 geneigt ist. Wie erwähnt ist zumindest eine Entlastungsöffnungen 25 je Ringsegment 14a vorgesehen, vorzugsweise aber mehrere, z.B. drei Entlastungsöffnungen 25 je Ringsegment 14a wie in Fig.2 dargestellt, um den Druckverlauf in Umfangsrichtung möglichst gleichmäßig zu gestalten. Die Druckverläufe an den axialen Ringenden RE1, RE2 und an der radial außenliegenden Außenumfangsfläche 23 sind im Wesentlichen identisch zum herkömmlichen Packungsring 7b gemäß Fig.5a. Der Druckverlauf an der dynamischen Dichtfläche entlang der radial innenliegenden Innenumfangsfläche 18 zwischen Kolbenstange 2 und Packungsring 14 wird nun durch die zumindest eine Entlastungsöffnung 25 je Ringsegment 14a gezielt beeinflusst.

Wie in Fig.5b ersichtlich, erfolgt ein Druckausgleich zwischen der radial außenliegenden Außenumfangsfläche 23 (hoher Druck P_{H}) und der der radial innenliegenden Innenumfangsfläche 18 (niedriger Druck P_{N}). Das bedeutet, dass der Druck zwischen dem zweiten axialen Ringende RE2 (zylinderseitig) und der, dem ersten axialen Ringende RE1 zugewandten Begrenzung des ersten Entlastungsöffnungsendes 25a der Entlastungsöffnung 25 im Wesentlichen konstant ist. Ab der, dem ersten axialen Ringende RE1 zugewandten Begrenzung des ersten Entlastungsöffnungsendes 25a der Entlastungsöffnung 25 und dem ersten axialen Ringende RE1 verringert sich der Druck vom hohen Druck P_{H} auf den relativ dazu niedrigeren Druck P_{N}, wobei der Druckverlauf näherungsweise im Wesentlichen linear ist, wie bereits anhand Fig.5a erläutert wurde.

Im Unterschied zum Packungsring 7b gemäß Fig.5a erfolgt am Packungsring 14 gemäß Fig.5b ein im Wesentlichen vollständiger Druckausgleich im Bereich zwischen dem zweiten axialen Ringende RE2 und der, dem ersten axialen Ringende RE1 zugewandten Begrenzung des ersten Entlastungsöffnungsendes 25a der Entlastungsöffnung 25 in axialer Richtung. Die Druckdifferenz ΔP zwischen dem Druckverlauf in Fig.5a und dem Druckverlauf in Fig.5b ist in Fig.5b schraffiert eingezeichnet. Daraus ergibt sich, dass der Packungsring 14 in axialer Richtung wegen des radialen Druckausgleichs über einen längeren Bereich gestützt wird als ein herkömmlicher Packungsring 7b und nur noch im Bereich zwischen der dem ersten axialen Ringende RE1 zugewandten Begrenzung des ersten Entlastungsöffnungsendes 25a und dem ersten axialen Ringende RE1 aufgrund der radialen Druckdifferenz stärker an die Kolbgenstange 2 gedrückt wird.

Der maximal mögliche Druckausgleich wird in der Praxis im Wesentlichen durch den Entlastungsöffnungsumfangsabstand z der Entlastungsöffnung/en 25 voneinander, durch den Entlastungsöffnungsaxialabstand x der Entlastungsöffnungsenden 25a vom ersten axialen Ringende RE1 und durch die Werkstoffeigenschaften des Packungsrings 14 limitiert. Die konstruktive Ausgestaltung erfolgt vorzugsweise so, dass der Entlastungsöffnungsumfangsabstand z zwischen den Entlastungsöffnungen 25 in Umfangsrichtung und der Entlastungsöffnungsaxialabstand x zwischen den Entlastungsbohrungen 25 und dem ersten axialen Ringende RE1 in axialer Richtung so gewählt wird, dass bei gegebenem Werkstoff eine ausreichend hohe Festigkeit des Packungsrings 14 gewährleistet wird, sodass es möglichst zu keiner Deformation und damit einhergehender Leckage im Bereich zwischen der ersten Entlastungsöffnungsenden 25a und dem ersten axialen Ringende RE1 des Packungsrings 14 kommt.

Um dies zu gewährleisten, beträgt der Entlastungsöffnungsumfangsabstand z vorzugsweise zumindest 1mm (bis 15mm), der Entlastungsöffnungsaxialabstand x beträgt vorzugsweise 4% bis 40% der axialen Ringbreite RB, die Entlastungsöffnungslänge der Entlastungsöffnungen 25 (zumindest an den Entlastungsöffnungsenden 25a) beträgt vorzugsweise 2% bis 100% der Ringbreite RB und die axiale Entlastungsöffnungsbreite der Entlastungsöffnungen 25 (zumindest an den Entlastungsöffnungsenden 25a) beträgt vorzugsweise 2%-30% der axialen Ringbreite RB. Die axiale Entlastungsöffnungsbreite der Entlastungsöffnungsenden 25a und der Entlastungsöffnungsaxialabstand x werden dabei so aufeinander abgestimmt, dass jedenfalls die Bedingung erfüllt ist, wonach die Entlastungsöffnungsenden 25a dezentral zwischen den axialen Ringenden RE1, RE2 liegen, also näher am ersten axialen Ringende RE1, als am zweiten axialen Ringende RE2. Wäre der Entlastungsöffnungsumfangsabstand z zu klein, so würde der Ring zu sehr geschwächt, was zu unerwünschten Deformationen und höherer Leckage führen kann. Wäre der Entlastungsöffnungsumfangsabstand z hingegen zu groß, so kann sich der hohe Druck P_{H} unter Umständen nicht vollständig zwischen den Entlastungsöffnungsenden 25a ausbilden. Dies würde zu einer ungünstigen Druckverteilung in Umfangsrichtung und folglich zu einem ungenügenden Druckausgleich führen, was wiederum eine höhere Reibkraft und dadurch einen höheren Ringverschließ zur Folge haben kann. Natürlich ist die in Fig.5b dargestellte Größe, Form und Anordnung der Entlastungsöffnung/en 25 nur beispielhaft zu verstehen, die konkrete konstruktive Ausgestaltung richtet sich nach dem Einsatzgebiet des Packungsrings 14 und bleibt dem Fachmann überlassen. Durch die erfindungsgemäße Neigung der Entlastungsöffnung 25 (zumindest in einem an die radial innenliegende Innenumfangsfläche 18 des Ringsegments 14a angrenzenden Abschnitt der Entlastungsöffnung 25) wird der Druckausgleich an den radialen Verschleiß des Packungsrings 14 angepasst, der während des Betriebs des Kolbenkompressors auftritt. Durch den radialen Verschleiß würde die Innenumfangsfläche 18 im Wesentlichen in Richtung der Außenumfangsfläche 23 "wandern". Dies würde aufgrund der Neigung der Entlastungsöffnung 25 wiederum dazu führen, dass das erste Entlastungsöffnungsende 25a der Entlastungsöffnung 25 in Abhängigkeit des Verschleißes in axialer Richtung in Richtung des ersten axialen Ringendes RE1 "wandern" würde. Folglich würde sich der Entlastungsöffnungsaxialabstand x verringern und damit der Druckausgleich des Packungsrings 14 erhöhen, da der hohe Druck p_{H} an der Innenumfangsfläche 18 näher an das erste axiale Ringende RE1 herangeführt werden würde.

In Fig.6 sind anhand mehrerer Längsschnitte A-A bis D-D durch einen Packungsring 14 beispielhaft verschiedene Möglichkeiten zur Anordnung der Entlastungsöffnung 25 und der Verschleißöffnung 27 dargestellt. In Schnitt A-A ist eine Entlastungsöffnung 25 dargestellt, die in radialer Richtung des Packungsrings 14 verläuft, also im Wesentlichen parallel zu den beiden axialen Ringenden RE1, RE2. Die Entlastungsöffnung 25 weist einen kreisrunden Querschnitt auf und ist in einem Entlastungsöffnungsaxialabstand x vom ersten axialen Ringende RE1 beabstandet, der sich von der Begrenzung des ersten Entlastungsöffnungsende 25a der Entlastungsöffnung 25 bemisst, das dem ersten axialen Ringende RE1 zugewandt ist. Der Entlastungsöffnungsaxialabstand x richtet sich nach dem Einsatzgebiet des Packungsrings 14 und insbesondere dem gewünschten Druckverlauf an der radial innenliegenden Innenumfangsfläche 18 des Packungsrings, wie anhand Fig.5b am Beispiel der geneigten Entlastungsöffnung 25 gezeigt wurde. Der Entlastungsöffnungsaxialabstand x beträgt vorzugsweise 4% bis 40%, vorteilhafterweise 4-30%, besonders bevorzugt 4-20%, ganz besonders bevorzugt 4-15%, insbesondere maximal 10% der axialen Ringbreite RB des Packungsrings 14. Wie bereits erwähnt sollte der Entlastungsöffnungsaxialabstand x einen gewissen Mindestabstand nicht unterschreiten, um eine ausreichend hohe Festigkeit des Packungsrings 14 zu gewährleisten, wobei der Mindestabstand 4% der axialen Ringbreite RB beträgt. Die Entlastungsöffnungen 25 sind also vorzugsweise überwiegend auf der, der Niederdruckseite zugewandten Hälfte des Packungsrings 14 vorgesehen, wenn sie, so wie dargestellt, als durchgehende radial verlaufende Bohrungen ausgeführt sind. Eine oder mehrere solcher nicht in Richtung des ersten axialen Ringendes RE1 geneigten Entlastungsöffnungen 25 können zusätzlich zur zumindest einen erfindungsgemäßen, in Richtung des ersten axialen Ringendes RE1 geneigten Entlastungsöffnung 25 vorgesehen werden.

Wenn die Entlastungsöffnung 25 als zylindrische Bohrung ausgeführt ist, beträgt der Entlastungsöffnungsdurchmesser d_{E} vorzugsweise zwischen 2-30%, vorzugsweise 2-25%, besonders bevorzugt 2-20%, insbesondere maximale 15% der axialen Ringbreite RB des Packungsrings 14. Die Entlastungsöffnung 25 kann aber auch einen nicht-kreisrunden, vorzugsweise konstanten Querschnitt, beispielsweise einen elliptischen Querschnitt oder einen Querschnitt in Form eines Langlochs aufweisen. In diesem Fall betreffen die genannten Dimensionen die axiale Entlastungsöffnungsbreite der Entlastungsöffnung 25.

Unabhängig von der Querschnittsform und dem Verlauf der Entlastungsöffnungen 25 gilt allgemein, dass die ersten Entlastungsöffnungsende 25a der Entlastungsöffnungen 25 an der radial innenliegenden Innenumfangsfläche 18 außermittig angeordnet sind. Sie liegen in axialer Richtung also näher am ersten axialen Ringende RE1, als am zweiten axialen Ringende RE2. Die axiale Entlastungsöffnungsbreite der Entlastungsöffnungen 25 am ersten Entlastungsöffnungsende 25a, z.B. der Durchmesser bei kreisrundem Querschnitt, hängt damit vom Entlastungsöffnungsaxialabstand x ab. Das bedeutet, je größer der Entlastungsöffnungsaxialabstand x vom ersten Ringende RE1 ist, desto geringer ist die maximal mögliche axiale Entlastungsöffnungsbreite, um zu gewährleisten, dass die Entlastungsöffnungsende 25a in axialer Richtung näher am ersten axialen Ringende RE1 liegen, als am zweiten axialen Ringende RE2.

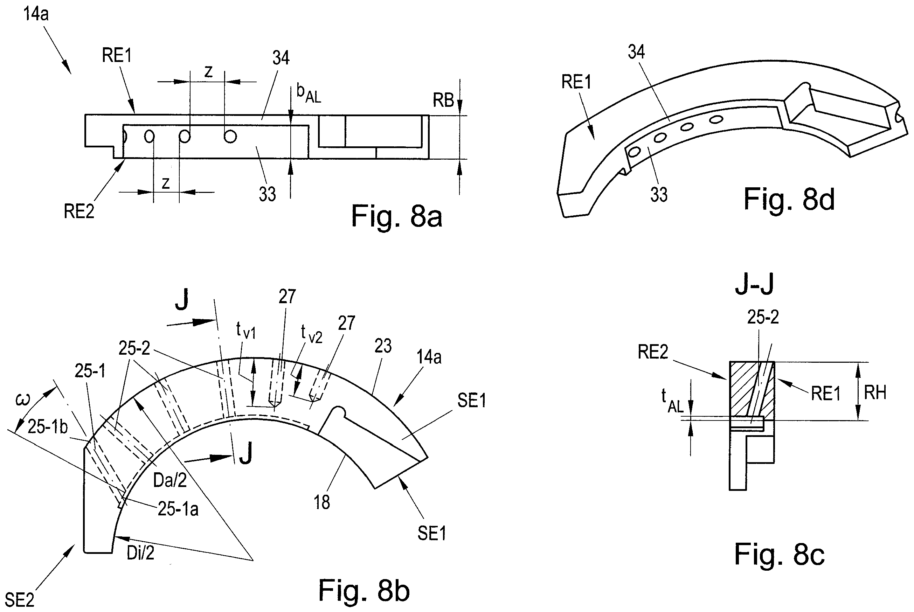

Wie bereits erwähnt und anhand Fig.2 gezeigt, ist erfindungsgemäß an zumindest einem Ringsegment 14a zumindest eine (zumindest abschnittsweise) in Richtung des ersten axialen Ringendes RE1 geneigte Entlastungsöffnung 25 vorgesehen, wie beispielhaft in Schnitt D-D in Fig.6 gezeigt ist. Die Entlastungsöffnung 25 weist hier analog Schnitt A-A einen kreisrunden Querschnitt auf, allerdings ist die Entlastungsöffnung 25 in axialer Richtung in einem Entlastungsöffnungswinkel ε zur radialen Richtung geneigt angeordnet, um den Druckausgleich erfindungsgemäß an den radialen Verschleiß anpassen zu können. Das radial äußere zweite Entlastungsöffnungsende 25b der Entlastungsöffnung liegt damit näher am ersten axialen Ringende RE1 als das radiale innere erste Entlastungsöffnungsende 25a. Im dargestellten Beispiel bemisst sich der Entlastungsöffnungswinkel ε zwischen dem ersten axialen Ringende RE1 und der Achse der, als zylindrische Bohrung ausgeführten Entlastungsöffnung 25. Der Entlastungsöffnungsaxialabstand x bemisst sich wie bereits beschrieben von der Begrenzung des ersten Entlastungsöffnungsendes 25a an der radial innenliegenden Innenumfangsfläche 18, das dem ersten axialen Ringende RE1 zugewandt ist. Die Werte des Entlastungsöffnungsaxialabstands x betreffen natürlich den Neuzustand des Packungsrings 14 ohne Verschleiß. Die Entlastungsöffnung/en 25 kann/können aber auch zusätzlich zur (zumindest abschnittsweisen) Neigung in Richtung des ersten axialen Ringendes RE1 (z.B. Längsschnitt D-D in Fig.6) in einer Draufsicht (Fig.3+4) einen von der radialen Richtung abweichenden Verlauf aufweisen, also geneigt sein, wie nachfolgend anhand Fig.8b noch näher erläutert wird.

Durch die geneigte Anordnung zumindest einer Entlastungsöffnung 25 kann der Druckausgleich in Abhängigkeit des Verschleißes des Packungsrings 14 verändert werden, da sich die axiale Position des radial inneren Entlastungsöffnungsendes 25a abhängig vom Verschleiß verändert. Im dargestellten Beispiel wandert das Entlastungsöffnungsende 25a bei einem radialen Verschleiß v des Packungsrings 14 in Richtung des ersten axialen Ringendes RE1. Das bedeutet, dass der Entlastungsöffnungsaxialabstand xᵥ bei einem radialen Verschleiß v geringer ist als der Entlastungsöffnungsaxialabstand x im Neuzustand des Packungsrings 14. Die Größe des Entlastungsöffnungsaxialabstands xᵥ hängt natürlich vom Entlastungsöffnungswinkel ε ab. Dadurch erhöht sich der Druckausgleich in axialer Richtung in Abhängigkeit des Verschleißzustands des Packungsrings 14, wobei der Grad des Druckausgleichs je nach Größe des Entlastungsöffnungswinkels ε gewählt werden kann.

Eine Entlastungsöffnung 25 muss aber nicht vollständig über ihre gesamte Länge geneigt ausgeführt sein, grundsätzlich wäre es auch ausreichend, wenn nur ein an die Innenumfangsfläche 18 angrenzender Abschnitt der Entlastungsöffnung 25 in Richtung des ersten axialen Ringendes RE1 geneigt ist. Der restliche, der Außenumfangsfläche 23 zugewandte Abschnitt der Entlastungsöffnung 25 könnte parallel zu den Ringenden RE1, RE2 verlaufen, so wie in Schnitt D-D gestrichelt angedeutet ist. Der Druckausgleich der abschnittsweise geneigten Entlastungsöffnung 25 wäre damit so lange verschleißabhängig, (das erste Entlastungsöffnungsende 25a wandert in Richtung des ersten Ringendes RE1) bis der Verschleiß v erreicht ist und der geneigte Abschnitt der Entlastungsöffnung 25 im Wesentlichen vollständig verschwunden ist.

Bei weiter fortschreitendem Verschleiß würde der Druckausgleich aufgrund des geraden (gestrichelten) Abschnitts der Entlastungsöffnung 25 im Wesentlichen konstant bleiben, da das erste Entlastungsöffnungsende 25a nicht weiter in Richtung des ersten Ringendes RE1 wandert. Die Länge des geneigten Abschnitts der Entlastungsöffnung 25 in radialer Richtung des Packungsrings 14 beträgt dabei vorzugsweise zwischen 0-60% der Ringhöhe RH, besonders bevorzugt 40%. Die gesamte Entlastungsöffnung 25 oder der an die Innenumfangsfläche 18 angrenzende Abschnitt der Entlastungsöffnung 25 könnten statt des geraden Verlaufs natürlich auch einen ganz oder teilweise gekrümmten Verlauf aufweisen. Die Entlastungsöffnung 25 oder der an die Innenumfangsfläche 18 angrenzende Abschnitt der Entlastungsöffnung 25 würde in diesem Fall in Richtung des ersten axialen Ringendes RE1 gekrümmt sein, sodass das erste Entlastungsöffnungsende 25a verschleißabhängig in Richtung des ersten Ringendes RE1 wandert.

Gemäß einer weiteren vorteilhaften Ausgestaltung der Erfindung kann, wie bereits erwähnt, zusätzlich zur zumindest einen erfindungsgemäß geneigten Entlastungsöffnung 25 eine oder mehrere Verschleißöffnung/en 27 an zumindest einem Ringsegment 14a des Packungsrings 14 vorgesehen sein, wie bereits anhand Fig.2 beschrieben wurde. In Schnitt B-B in Fig.6 ist eine Verschleißöffnung 27 in Form einer zylindrischen Bohrung mit konischem Grund und mit einem Verschleißöffnungsdurchmesser dᵥ dargestellt. Die Verschleißöffnung 27 erstreckt sich hier in radialer Richtung des Packungsrings 24, im gezeigten Beispiel also parallel zum ersten und zweiten axialen Ringende RE1, RE2. Die Verschleißöffnung 27 erstreckt sich allerdings im Unterschied zur Entlastungsöffnung 25 ausgehend von der radial außenliegenden Außenumfangsfläche 23 des Packungsrings 14 nur über einen Teil der Ringhöhe RH in Richtung der radial innenliegenden Innenumfangsfläche 18, ohne diese (im Neuzustand, ohne Verschleiß) zu erreichen. Das bedeutet, dass die Verschleißöffnung 27 erst ab einem bestimmten radialen Verschleiß v des Packungsrings die radial außenliegenden Außenumfangsfläche 23 des Packungsrings 14 mit der radial innenliegenden Innenumfangsfläche 18 verbindet. Die Verschleißöffnung 27 trägt damit erst ab diesem Verschleißzustand v zum Druckausgleich bei und übernimmt im Wesentlichen dann eine analoge Funktion wie die Entlastungsöffnungen 25.

Die zumindest eine Verschleißöffnung 27 ist in einem Verschleißöffnungsaxialabstand y vom ersten axialen Ringende RE1 beabstandet, wobei sich der Verschleißöffnungsaxialabstand y von dem Punkt der Verschleißöffnung 27 bemisst, der in radialer Richtung am nächsten an der Innenumfangsfläche 18 liegt, da dieser Punkt als erstes durch den Verschleiß freigelegt wird. Das bedeutet, dass die Verschleißöffnung 27 nicht mit dem ersten axialen Ringende RE1 verbunden ist, sondern nur mit der radial außenliegenden Außenumfangsfläche 23 und/oder mit dem zweiten axialen Ringende RE2. Allgemein liegt das der Innenumfangsfläche 18 zugewandte radial innere Verschleißöffnungsende 27a damit zwischen dem ersten und dem zweiten axialen Ringende RE1, RE2. Das Verschleißöffnungsende 27a ist damit in axialer Richtung und in Umfangsrichtung gesehen vom Material des Packungsrings 14 umgeben. Im gezeigten Beispiel (Schnitt B-B) ist die Verschleißöffnung 27 als Bohrung mit konischem Grund ausgeführt, der Verschleißöffnungsaxialabstand y bemisst sich damit bis zur Spitze des Verschleißöffnungsendes 27a. Der Verschleißöffnungsaxialabstand y kann gleich groß sein wie der Entlastungsöffnungsaxialabstand x, kann aber beispielsweise auch unterschiedlich sein, so wie in Fig.6 angedeutet ist. Vorzugsweise beträgt der Verschleißöffnungsaxialabstand y 2-20% der axialen Ringbreite RB des Packungsrings 14, besonders bevorzugt 2-15%, insbesondere maximal 10%.

Die radiale Erstreckung der Verschleißöffnung 27 ausgehend von der radial äußeren Außenumfangsfläche 23, hier die Verschleißöffnungstiefe tᵥ der zylindrischen Bohrung, ist so gewählt, dass das Verschleißöffnungsende 27a in radialer Richtung in einem Abstand von der Innenumfangsfläche 18 beabstandet ist, der höchstens 40% der radialen Ringhöhe RH beträgt und wird vorteilhafterweise in Abhängigkeit eines erwarteten Verschleißes v des Packungsrings 14 gewählt. Beispielsweise könnte die Zeitdauer bis zum Erreichen eines bestimmten Verschleißes v eines bestimmten Packungsring-Werkstoffs unter bestimmten Betriebsbedingungen und unter Berücksichtigung der Oberflächenrauhigkeit der Kolbenstange 2 in Versuchen ermittelt werden. Daraus könnte z.B. abgeschätzt werden, wie lange (z.B. viele Betriebsstunden) ein Kompressor bis zum Erreichen des Verschleißes v betrieben werden kann. Die Verschleißöffnungstiefe tᵥ der Verschleißöffnung 27 könnte dann so bemessen werden, dass die Verschleißöffnung 27 ab einer bestimmten Anzahl von Betriebsstunden die radial äußeren Außenumfangsfläche 23 mit der radial inneren Innenumfangsfläche 18 verbindet, um ab diesem Zeitpunkt einen erhöhten Druckausgleich zu ermöglichen.

Es könnte aber auch zumindest eine Verschleißöffnung 27 am Packungsring 14 vorgesehen sein, an der zumindest ein, der radial innenliegende Innenumfangsfläche 18 zugewandter Endabschnitt in Richtung des ersten axialen Ringendes RE1 geneigt ist, analog der zumindest einen erfindungsgemäß geneigten Entlastungsöffnung 25. Vorzugsweise ist aber nicht nur der Endabschnitt der Verschleißöffnung 27 geneigt (so wie in Schnitt C-C gestrichelt angedeutet ist), sondern die gesamte Verschleißöffnung 27. Insbesondere kann zumindest eine Verschleißöffnung 27 als zylindrische Bohrung ausgeführt sein, die sich von der radial außenliegenden Außenumfangsfläche 23 schräg in Richtung der radial innenliegenden Innenumfangsfläche 18 erstreckt, so wie in Schnitt C-C in Fig.6 dargestellt ist. Die Verschleißöffnung 27 ist hier in einem in einem Verschleißsöffnungswinkel ϕ zum ersten axialen Ringende RE1 geneigt. Damit würde analog der geraden Ausführung (Schnitt B-B) ab dem Verschleiß v ein erhöhter Druckausgleich stattfinden. Zusätzlich würde bei der geneigten Variante gemäß Schnitt C-C ab dem Verschleiß v der Druckausgleich in Abhängigkeit des weiter fortschreitenden Verschleißes automatisch erhöht, wie bereits anhand der erfindungsgemäß in Richtung des ersten axialen Ringendes RE1 geneigten Entlastungsöffnung 25 (Schnitt D-D) erläutert wurde. Die Verschleißöffnungstiefe tᵥ entspricht bei der schrägen Bohrung nicht der Bohrungstiefe, sondern der maximalen Erstreckung der Verschleißöffnung 27 in radialer Richtung, ausgehend von der radial außenliegenden Außenumfangsfläche 23, so wie in Schnitt C-C dargestellt ist.

Der Verschleißöffnungsdurchmesser dᵥ der Verschleißöffnung/en 27 (bei kreisrundem Querschnitt) kann beispielsweise dem Entlastungsöffnungsdurchmesser v_{E} entsprechen oder davon verschieden sein. Ebenso könnte der Verschleißsöffnungswinkel ϕ zwischen der Verschleißöffnung 27 und dem ersten axialen Ringende RE1dem Entlastungsöffnungswinkel ε entsprechen oder davon verschieden sein. Das hängt wiederum von den Randbedingungen des Einsatzes des Packungsrings 14 ab und von den gewünschten Eigenschaften hinsichtlich des zu erzielenden Druckausgleichs.

Die Entlastungsöffnungen 25 und/oder die Verschleißöffnungen 27 müssen aber nicht zwangsläufig in die radial außenliegende Außenumfangsfläche 23 des Packungsrings 24 münden. Es wäre z.B. denkbar, dass sich eine Entlastungsöffnung 25 und/oder Verschleißöffnung 27 zusätzlich oder alternativ in das zweite axiale Ringende RE2 erstreckt, beispielsweise so wie in Schnitt A-A für die Entlastungsöffnung 25 und in Schnitt B-B für die Verschleißöffnung gestrichelt angedeutet ist. Da der zylinderseitige hohe Druck P_{H} auch am zweiten axialen Ringende RE2 anliegt, könnte der Effekt des Druckausgleichs auch mit einer Entlastungsöffnung 25 realisiert werden, die die radial innenliegende Innenumfangsfläche 18 mit dem zweiten axialen Ringende RE2 verbindet bzw. mit einer Verschleißöffnung 27, welche ab einem bestimmten Verschleiß v die Innenumfangsfläche 18 mit dem zweiten axialen Ringende RE2 verbindet. Aufgrund der einfacheren Herstellung ist aber vorteilhaft, wenn die Entlastungsöffnungen 25 und/oder die Verschleißöffnungen 27 insbesondere in Form einer zylindrischen Bohrung ausgehend von der radial außenliegende Außenumfangsfläche 23 des Packungsrings 24 bis bzw. in Richtung der radial innenliegende Innenumfangsflächen 18 angeordnet werden.

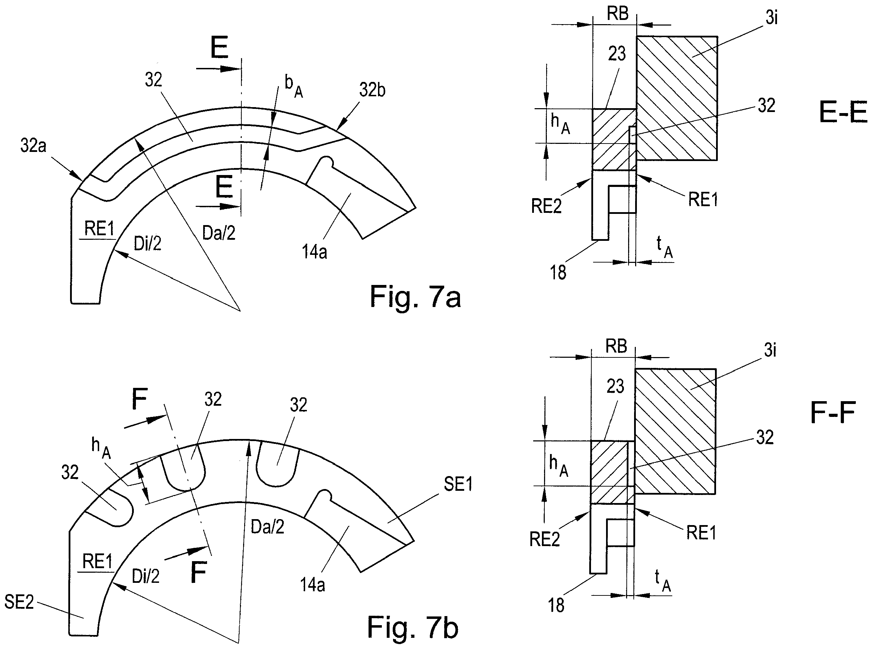

Gemäß einer weiteren vorteilhaften Ausgestaltung des Packungsrings 14 kann am Packungsring 14 zumindest eine Ausgleichsausnehmung 32 vorgesehen sein, wie in Fig.7a-7d jeweils anhand eines Ringsegments 14a dargestellt ist. Die zumindest eine Ausgleichsausnehmung 32 erstreckt sich von der radial außenliegenden Außenumfangsfläche 23 des Packungsrings 14 über einen Teil der Ringhöhe RH in Richtung der radial innenliegenden Innenumfangsfläche 18 des Packungsrings 14 und vom ersten axialen Ringende RE1 über einen Teil der Ringbreite RB in Richtung des zweiten axialen Ringendes RE2. Die Ausgleichsausnehmung/en 32 dient/dienen im Wesentlichen dazu, die axiale Anpresskraft und folglich die Reibung an der Kontaktfläche zwischen dem ersten axialen Ringende RE1 und dem Gehäusesegment 3i (schematisch in Schnitt E-E in Fig.7a angedeutet) der Abdichtungsvorrichtung 1 im Betrieb des Kompressors zu verringern.

Insbesondere bei stark druckausgeglichenen Packungsringen 14 (z.B. große Anzahl von Entlastungsöffnungen 25, geringer Entlastungsöffnungsumfangsabstand z, geringer Entlastungsöffnungsaxialabstand x) kann es vorkommen, dass der Packungsring 14 im Betrieb bedingt durch den hohen Druckausgleich nur noch mit einer relativ geringen resultierenden Kraft radial gegen die Kolbenstange 2 gepresst wird (siehe z.B. Fig.5b). Etwaig im Betrieb auftretenden Lateralbewegungen der Kolbenstange 2 könnte der Packungsring 14 ohne Ausgleichsausnehmung 32 aufgrund der Reibung an der Kontaktfläche zwischen dem ersten axialen Ringende RE1 und dem Gehäusesegment 3i unter Umständen nur unzureichend folgen, was zu einem Abheben des Packungsrings 14 von der Kolbenstange 2 in radialer Richtung und damit zu unerwünschten Leckagen führen würde. Durch die Ausgleichsausnehmung 32 wird die, der lateralen Bewegung des Packungsrings 14 entgegenwirkende Reibungskraft verringert, wodurch der Packungsring 14 den Bewegungen der Kolbenstange 2 in radialer Richtung besser folgen kann. Die Ausgleichsausnehmung/en 32 kann/können verschieden ausgestaltet sein, wie nachfolgend im Detail anhand Fig.7a-7d beschrieben wird, wobei links jeweils das Ringsegment 14a in Draufsicht dargestellt ist und rechts jeweils eine Schnittansicht entsprechend der jeweiligen Schnittlinie.

In Fig.7a ist die Ausgleichsausnehmung 32 in Form einer länglichen Nut der Breite b_{A} ausgeformt, die ein erstes Ausgleichsausnehmungsende 32a und ein in Umfangsrichtung in einem bestimmten Winkel davon beabstandetes zweites Ausgleichsausnehmungsende 32b aufweist, wie in der Darstellung links ersichtlich ist. Die im Schnitt E-E ersichtliche maximale Erstreckung h_{A} der Ausgleichsausnehmung 32 in radialer Richtung beträgt vorzugsweise 60% der radialen Ringhöhe RH. Dadurch wird gewährleistet, dass noch eine ausreichend große statische Dichtfläche am ersten axialen Ringende RE1 zur Verfügung steht, welche mit der Kontaktfläche am Gehäusesegment 3i in Kontakt steht, um eine radiale Abdichtung zu erreichen. Die maximale Erstreckung h_{A} der Ausgleichsausnehmung/en 32 in radialer Richtung gilt unabhängig von der konstruktiven Ausgestaltung der Ausgleichsausnehmung/en 32. Die maximale Ausgleichsausnehmungstiefe t_{A} der Ausgleichsausnehmung/en 32 in axialer Richtung des Packungsrings 14 beträgt zwischen 1-40% der Ringbreite RB des Packungsrings 14, vorzugsweise 0,5mm, wobei dies ebenfalls unabhängig von der konkreten Ausgestaltung (Fig.7a-7d) der Ausgleichsausnehmung 32 gilt.

Die Ausgestaltung gemäß Fig.7b weist mehrere getrennte Ausgleichsausnehmungen 32 auf, die in Umfangsrichtung voneinander beabstandet sind, wie in der linken Draufsicht dargestellt ist. Dadurch können die in Umfangsrichtung außenliegend (an den Segmentenden SE1, SE2) angeordneten Ausgleichsausnehmungen 32 beispielsweise anders dimensioniert werden als die dazwischen liegenden Ausgleichsausnehmungen 32, wodurch die Anpresskraft in Umfangsrichtung variiert werden kann. Der rechts dargestellte Schnitt F-F zeigt, wiederum die Erstreckung h_{A} der entsprechenden Ausgleichsausnehmung 32 in radialer Richtung sowie die Ausgleichsausnehmungstiefe t_{A}.

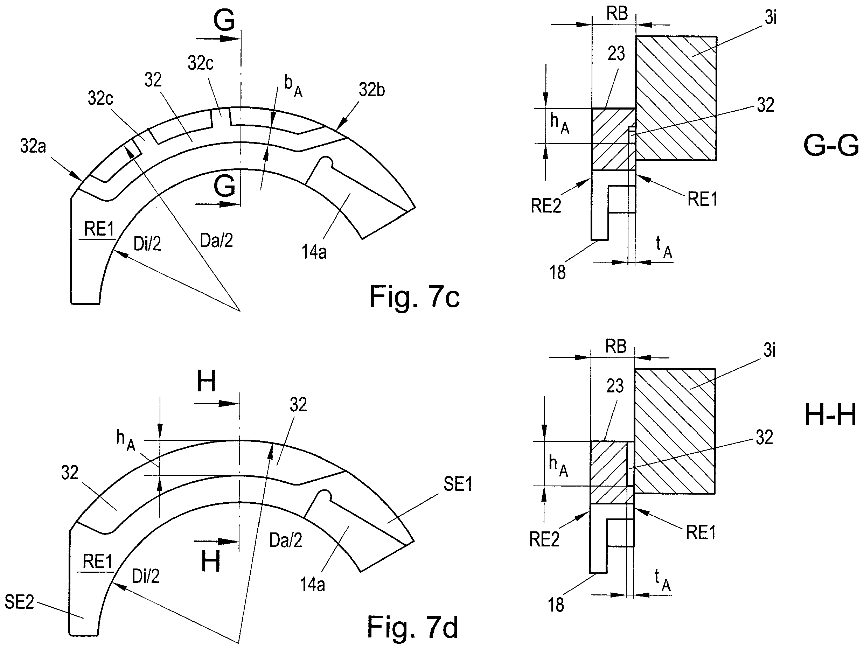

Die Ausgestaltung der Ausgleichsausnehmung 32 in Fig.7c entspricht im Wesentlichen jener in Fig.7a, aber mit dem Unterschied, dass die Ausgleichsausnehmung 32 in einem, in Umfangsrichtung zwischen dem ersten Ausgleichsausnehmungsende 32a und dem zweiten Ausgleichsausnehmungsende 32b liegenden Bereich zusätzliche Ausgleichsausnehmungsöffnungen 32c aufweist, welche die Ausgleichsausnehmung 32 radial mit der radial außen liegenden Außenumfangsfläche 23 verbinden, wie in der linken Draufsicht ersichtlich ist. Der rechts dargestellte Schnitt G-G zeigt, wiederum die Erstreckung h_{A} der Ausgleichsausnehmung 32 in radialer Richtung sowie die Ausgleichsausnehmungstiefe t_{A}.

Fig.7d zeigt eine weitere Ausgestaltung einer Ausgleichsausnehmung 32, wobei die Ausgleichsausnehmung 32 über ihre gesamte Erstreckung in Umfangsrichtung radial mit der Außenumfangsfläche 23 des Packungsrings verbunden ist, wie in der linken Draufsicht dargestellt ist. Dadurch entsteht eine relativ große Kontaktfläche am Gehäusesegment 3i, an der der zylinderseitige hohe Druck p_{H} wirken kann, wodurch die axiale Anpresskraft des Packungsrings 14 an das Gehäusesegment 3i im Vergleich zu den Varianten gemäß Fig.7a-c weiter verringert werden kann. Der rechts dargestellte Schnitt H-H zeigt, wiederum die Erstreckung h_{A} der entsprechenden Ausgleichsausnehmung 32 in radialer Richtung sowie die Ausgleichsausnehmungstiefe t_{A}.

Die gezeigten Varianten sind aber natürlich nur beispielhaft, die in nicht einschränkender Weise mögliche konstruktive Ausgestaltungen der Ausgleichsausnehmung/en 32 zeigen sollen. Der Fachmann kann natürlich auch andere Ausgestaltungen der Ausgleichsausnehmung/en 32 vorsehen.

In den Fig.8a-d ist eine weitere vorteilhafte Ausgestaltung des erfindungsgemäßen Packungsrings 14 anhand eines Ringsegments 14a beispielhaft dargestellt. Wie bereits hinlänglich beschrieben, ist am Packungsring 14 zumindest eine Entlastungsöffnung 25 vorgesehen, wobei zumindest ein, an die radial innenliegende Innenumfangsfläche 18 des Ringsegments 14a angrenzender Abschnitt der Entlastungsöffnung 25 in Richtung des ersten axialen Ringendes RE1 geneigt ist. In Fig.8 sind vier Entlastungsöffnungen 25 je Ringsegment 14a angeordnet, die jeweils in einem Entlastungsöffnungsumfangsabstand z voneinander beabstandet sind. Der Entlastungsöffnungsumfangsabstand z muss aber nicht zwischen allen Entlastungsöffnungen 25 gleich groß sein (so wie dargestellt), sondern könnte z.B. auch unterschiedlich sein.

An der radial innenliegenden Innenumfangsfläche 18 zumindest eines Ringsegments 14a des Packungsrings 14 ist gemäß einer weiteren vorteilhaften Ausgestaltung der Erfindung zumindest eine Anlaufausnehmung 33 vorgesehen. Die zumindest eine Anlaufausnehmung 33 erstreckt sich in axialer Richtung des Ringsegments 14a vom zweiten axialen Ringende RE2 über einen Teil der Ringbreite RB in Richtung des ersten axialen Ringendes RE1. In radialer Richtung des Ringsegments14a erstreckt sich die Anlaufausnehmung 33 von der radial innenliegenden Innenumfangsfläche 18 des Ringsegments 14a einen kleinen Teil der Ringhöhe RH in Richtung der radial außenliegenden Außenumfangsfläche 23 des Ringsegments 14a. In Umfangsrichtung ist die Anlaufausnehmung 33 von den jeweiligen Segmentenden SE1, SE2 beabstandet. Fig.8d zeigt eine isometrische Ansicht des Ringsegments 14a, wobei die Anlaufausnehmung 33 gut ersichtlich ist. Im gezeigten Beispiel ist nur eine Anlaufausnehmung 33 am Ringsegment 14a vorgesehen, es könnten aber natürlich auch mehrere, im Verhältnis zur dargestellten Anlaufausnehmung 33 kleinere Anlaufausnehmungen 33 in Umfangsrichtung voneinander beabstandet nebeneinander am Ringsegment 14a vorgesehen werden.

Die Anordnung einer Anlaufausnehmung 33 wird insbesondere bei stark druckausgeglichenen Packungsringen 14 (z.B. große Anzahl an Entlastungsöffnungen 25, geringer Entlastungsöffnungsumfangsabstand z und geringer Entlastungsöffnungsaxialabstand x) verwendet. Bei solchen Packungsringen 14 kann es beim Hochlaufen des Kompressors aus dem Stillstand zu erhöhten Leckagen kommen, da der radiale Anpressdruck, mit der der Packungsring 14 gegen die Kolbenstange 2 gepresst wird, unter Umständen nicht ausreicht, um fertigungsbedingte Toleranzfehler oder allfällige Grate am Packungsring 14 und/oder an der Kolbenstange 2 auszugleichen. Durch die Anordnung zumindest einer Anlaufausnehmung 33 liegt der Packungsring 14 am Beginn der Hochlaufphase auf einer, im Vergleich zur gesamten radial innenliegenden Innenumfangsfläche 18 relativ kleinen Anlauffläche 34 an der Kolbenstange 2 an. Dadurch wird die druckbedingte Flächenpressung an der Anlauffläche 34 am Beginn der Hochlaufphase erhöht, was zu einer verbesserten Dichtwirkung und folglich geringeren Leckage führt. Unter der Hochlaufphase ist in diesem Zusammenhang nicht nur der erstmalige Start des Kolbenkompressors zu verstehen, sondern jeder Start aus dem Stillstand (zumindest solange eine Anlauffläche 34 vorhanden ist). Vorzugsweise wird die zumindest eine Anlaufausnehmung 33 so dimensioniert, dass die verbleibende Anlauffläche 34 eines Ringsegments 14a zwischen 25% und 75% der Innenumfangsfläche 18 des Ringsegments 14a beträgt, vorzugsweise 60%. Wenn mehrere Anlaufausnehmungen 33 am Ringsegment 14a angeordnet werden, bezieht sich das Flächenverhältnis auf die Summe der einzelnen Flächen der Anlaufausnehmungen 33 im Verhältnis zur Innenumfangsfläche 18 des Ringsegments 14a.

In Fig.8a ist ein Ringsegment 14a des Packungsrings 14 in einer Ansicht normal auf die radial innenliegende Innenumfangsfläche 18 dargestellt. Ausgehend vom zweiten axialen Ringende RE2, an der im Betrieb des Kolbenkompressors der zylinderseitige hohe Druck P_{H} anliegt, erstreckt sich Anlaufausnehmung 33 über einen Teil der Ringbreite RB in Richtung des ersten axialen Ringendes RE1, an dem im Betrieb der relativ dazu niedrigere Druck P_{N} herrscht. Die Anlaufausnehmungsbreite b_{AL} in axialer Richtung des Packungsrings 14 beträgt vorzugsweise 30% bis 90% der axialen Ringbreite RB, insbesondere 65%, um eine ausreichend hohe Wirkung während des Hochlaufs des Kompressors zu entfalten. Weiters sind in Fig.8a die ersten Entlastungsöffnungsenden 25a der Entlastungsöffnungen 25 ersichtlich, welche jeweils in Umfangsrichtung im Entlastungsöffnungsumfangsabstand z voneinander beabstandet sind (bemessen von den einander zugewandten Begrenzungen der Entlastungsöffnungsenden 25a).

Fig.8b zeigt eine Draufsicht auf das erste axiale Ringende RE1 des Ringsegments 14a. Fig.8c zeigt einen Längsschnitt durch das Ringsegment 14a im Bereich einer Entlastungsöffnung 25 gemäß der Schnittlinie J-J der Fig.8b. In Fig.8c ist die im Vergleich zur radialen Ringhöhe RH sehr geringe radiale Anlaufausnehmungstiefe t_{AL} ersichtlich, die sich im Bereich zwischen 1 bismaximal 3% der radialen Ringhöhe RH bewegt, besonders bevorzugt 2%. Durch diese sehr geringe Anlaufausnehmungstiefe t_{AL} wird das Anlaufverhalten wie beschrieben verbessert, ohne dass sich das Verhalten des Packungsrings 14 während des normalen Betriebs des Kompressors grundlegend verändert. Die Anlaufausnehmung 33 ist daher keine Umfangsnut im herkömmlichen Sinne, welche die Entlastungsöffnungen 25 verbindet und leistet daher im Betrieb des Kompressors keinen oder einen vernachlässigbar geringen Beitrag zum Druckausgleich. Nach dem Verschleiß der Anlauffläche 34 verhält sich der Packungsring 14 wie ein Ring ohne Anlaufausnehmung 33. Im Rahmen der Erfindung ist unter der direkten Einmündung der Entlastungsöffnungsenden 25a der Entlastungsöffnungen 25 in die radial innenliegende Innenumfangsfläche 18 damit auch ein Einmünden in die Anlaufausnehmung 33 zu verstehen. Die anhand Fig.5b gezeigten Druckverhältnisse haben also im Wesentlichen auch für einen Packungsring 14 mit Anlaufausnehmung 33 Gültigkeit. Wenn mehrere Anlaufausnehmungen 33 an einem Packungsring 14 vorgesehen sind, z.B. eine Anlaufausnehmung 33 je Ringsegment 14a (so wie dargestellt) oder mehrere Anlaufausnehmungen 33 je Ringsegment 14a, können diese auch unterschiedlich ausgeführt sein. Beispielsweise können die Anlaufausnehmungen 33 unterschiedliche radiale Anlaufausnehmungstiefen t_{AL} und/oder unterschiedliche Formen und/oder unterschiedliche Anlaufausnehmungsbreiten b_{AL} in axialer Richtung aufweisen, um das Anlaufverhalten des Packungsrings 14 noch variabler gestalten zu können. Die Randbedingungen, insbesondere hinsichtlich der verbleibenden Anlauffläche 34 bleiben aber gleich. Fertigungsbedingt kann/können die Anlaufausnehmung/en 33 an den Kanten unter Umständen auch einen gewissen Radius aufweisen, der sich z.B. aus der Geometrie eines verwendeten Werkzeugs wie beispielsweise einem Fräser ergibt.

In Fig.8b sind nochmals Entlastungsöffnungen 25 sowie Verschleißöffnungen 27 in verschiedenen Varianten gestrichelt (unsichtbar) dargestellt. Die Entlastungsöffnung 25-1, die am zweiten Segmentende SE2 des Ringsegments 14a angeordnet ist unterscheidet sich hier von den restlichen drei Entlastungsöffnungen 25-2. Die Entlastungsöffnungen 25-2 sind als zylindrische Durchgangsbohrungen ausgeführt und weisen einen Verlauf in radialer Richtung des Packungsrings 14 bzw. hier des Ringsegments 14a auf und sind in Richtung des ersten axialen Ringendes RE1 geneigt, wie in Fig.8c ersichtlich. Die Entlastungsöffnungen 25-2 weisen also einen bestimmten Entlastungsöffnungswinkel ε>0 auf, um den Druckausgleich erfindungsgemäß an den radialen Verschleiß des Packungsrings 14 anzupassen. Natürlich könnte aber auch nur eine Entlastungsöffnung 25-2 geneigt ausgeführt sein und die anderen Entlastungsöffnungen 25-2 könnten sich beispielsweise parallel zum ersten und zweiten Ringende RE1, RE2 erstrecken, wie in Schnitt A-A in Fig.6 ersichtlich ist.

Die Entlastungsöffnung 25-1, die am zweiten Segmentende SE2 des Ringsegments 14a angeordnet ist, verläuft hier in einer von der radialen Richtung des Ringsegments 14a abweichenden Richtung. Im Unterschied zu den nur in einem ersten Entlastungsöffnungswinkel ε in axialer Richtung geneigten Entlastungsöffnungen 25-2, ist die Entlastungsöffnung 25-1 in der dargestellten Ebene in einem zweiten Entlastungsöffnungswinkel ω von der radialen Richtung abweichend angeordnet. Das bedeutet im Wesentlichen, dass das in die radial außenliegende Außenumfangsfläche 23 des Packungsrings 14 mündende zweite Entlastungsöffnungsende 25-1b in Umfangsrichtung vom ersten Entlastungsöffnungsende 25-1a beabstandet ist, das in die innenliegende Innenumfangsfläche 18 mündet, wie in Fig.8b dargestellt ist.

Der Abstand der Entlastungsöffnungsenden 25-1a, 25-1b ergibt sich aus dem Entlastungsöffnungswinkel ω und dem Außendurchmesser Da des Packungsrings 14 zu ω*Da. Durch diese schräge Anordnung der Entlastungsöffnung 25-1 wird auch ein Druckausgleich in einem nahe am zweiten Segmentende SE2 liegenden Abschnitt der innenliegenden Innenumfangsfläche 18 ermöglicht. Ein solcher Druckausgleich wäre mit einer (in der dargestellten Ebene in Fig.8b) radial verlaufenden Entlastungsöffnung 25 analog der Entlastungsöffnungen 25-2 aufgrund der Überlappung der Segmentenden SE2, SE1 zweier aneinandergrenzender Ringsegmente 14a nicht oder nur schwer realisierbar. Natürlich wäre es aber auch denkbar, dass eine oder mehrere Entlastungsöffnung/en 25 an einem Packungsring 14 oder einem Ringsegment 14a vorgesehen werden, die sowohl in einem ersten Entlastungsöffnungswinkel ε, als auch in einem zweiten Entlastungsöffnungswinkel ω von der radialen Richtung abweichend angeordnet sind. Das bedeutet, das erste Entlastungsöffnungsende 25a könnte vom zweiten Entlastungsöffnungsende 25b sowohl in axialer Richtung, als auch in Umfangsrichtung beabstandet sein.

Die beiden Verschleißöffnungen 27 verlaufen hier in radialer Richtung des Ringsegments 14a. Wie in Fig.8b ersichtlich ist, erstrecken sich die beiden Verschleißöffnungen 27 mit einer unterschiedlichen Tiefe tᵥ₁ > tᵥ₂ von der radiale außenliegenden Außenumfangsfläche 23 des Packungsrings 14 in Richtung der radial innenliegenden Innenumfangsfläche 18. Bei einem Verschleiß v=RH-tᵥ₁ wird zuerst die Verschleißöffnung 27 mit der Tiefe tᵥ₁ freigelegt und bei fortschreitendem Verschleiß v=RH-tᵥ₂ wird die Verschleißöffnung 27 mit der Tiefe tᵥ₂ freigelegt. Damit wird eine im Wesentlichen zweistufige Erhöhung des Druckausgleichs erreicht. Natürlich könnten auch mehr oder weniger Verschleißöffnungen 27 und/oder Entlastungsöffnungen 25 vorgesehen werden. Eine oder mehrere Verschleißöffnung/en 27 könnte/könnten auch zusätzlich oder alternativ zur unterschiedlichen Tiefe tᵥ in einem ersten Verschleißöffnungswinkel ϕ zur radialen Richtung des Packungsrings 14 geneigt angeordnet sein (siehe Schnitt C-C in Fig.6) und/oder in einem (nicht dargestellten) zweiten Verschleißöffnungswinkel λ, analog zum zweiten Entlastungsöffnungswinkel ω, wie in Fig.8b dargestellt wurde.

Je nach Anwendung können die gezeigten Ausführungsformen der Erfindung natürlich beliebig kombiniert werden, um ein gewünschtes Ergebnis, insbesondere einen gewünschten Druckausgleich des Packungsrings 14 zu erreichen. Vorzugsweise wird zumindest ein erfindungsgemäßer Packungsring 14 in einer in Fig.1 dargestellten Abdichtungsvorrichtung 1 eines Kolbenkompressors angeordnet, besonders bevorzugt mehrere erfindungsgemäße Packungsringe 14 in axialer Richtung hintereinander.

Es sei abschließend nochmals darauf hingewiesen, dass die beschriebenen und gezeigten Merkmale der in den Fig.1-8d dargestellten Ausführungsformen unabhängig voneinander zu betrachten sind und natürlich auch für sich alleine oder in beliebiger Kombination verwendet werden können. Ein Packungsring 14 muss beispielsweise nicht zwangsläufig, sowie in Fig.2 dargestellt, Entlastungsöffnungen 25 und Verschleißöffnungen aufweisen. Im einfachsten Fall könnte der erfindungsgemäße Packungsring 14 an zumindest einem Ringsegment 14a zumindest eine Entlastungsöffnung 25 mit beliebiger Form aufweisen, die sich von der Innenumfangsfläche 18 bis zur Außenumfangsfläche 23 und/oder bis zum zweiten axialen Ringende RE2 des Ringsegments 14a erstreckt, wobei zumindest ein, an die radial innenliegende Innenumfangsfläche 18 des Ringsegments 14a angrenzender Abschnitt der zumindest einen Entlastungsöffnung 25 in Richtung des ersten axialen Ringendes RE1 geneigt ist. Optional könnten eine oder mehrere nicht in Richtung des ersten axialen Ringendes RE1 geneigte Entlastungsöffnungen 25 vorgesehen sein und/oder es könnten eine oder mehrere Verschleißöffnungen 27 vorgesehen werden, von denen eine oder mehrere ebenfalls geneigt sein kann/können. Weiters könnten optional eine oder mehrere Ausgleichsausnehmungen 32 und/oder Anlaufausnehmungen 33 und/oder Axialnuten 24 und/oder eine Umfangsnut 20 am Packungsring 14 vorgesehen werden.

## Patentansprüche

1. Packungsring (14) mit zumindest drei Ringsegmenten (14a) mit jeweils einem ersten Segmentende (SE1) und einem zweiten Segmentende (SE2) in Umfangsrichtung, wobei eine erste Tangentialkontaktfläche (19a) des ersten Segmentendes (SE1) eines Ringsegments (14a) an einer zweiten Tangentialkontaktfläche (19b) des zweiten Segmentendes (SE2) eines in Umfangsrichtung daran anschließenden Ringsegments (14a) anliegt, um eine radiale Abdichtung des Packungsrings (14) zu erzeugen und eine, einem ersten axialen Ringende (RE1) des Packungsrings (14) zugewandte erste Axialkontaktfläche (16) des ersten Segmentendes (SE1) eines Ringsegments (14a) an einer, einem zweiten axialen Ringende (RE2) des Packungsrings (14) zugewandten zweiten Axialkontaktfläche (17) des zweiten Segmentendes (SE2) eines in Umfangsrichtung daran anschließenden Ringsegments (14a) anliegt, um eine axiale Abdichtung des Packungsrings (14) zu erzeugen, **dadurch gekennzeichnet, dass** an zumindest einem Ringsegment (14a) zumindest eine Entlastungsöffnung (25) vorgesehen ist, die sich von einer radial innenliegenden Innenumfangsfläche (18) des Ringsegments (14a) bis zu einer radial außenliegenden Außenumfangsfläche (23) und/oder bis zum zweiten axialen Ringende (RE2) des Ringsegments (14a) erstreckt, wobei zumindest ein, an die radial innenliegende Innenumfangsfläche (18) des Ringsegments (14a) angrenzender Abschnitt der zumindest einen Entlastungsöffnung (25) in Richtung des ersten axialen Ringendes (RE1) geneigt oder gekrümmt ist.

2. Packungsring (14) nach Anspruch 1, **dadurch gekennzeichnet, dass** ein in die radial innenliegende Innenumfangsfläche (18) des Ringsegments (14a) mündendes erstes Entlastungsöffnungsende (25a) zumindest einer Entlastungsöffnung (25) in einem Entlastungsöffnungsaxialabstand (x) vom ersten axialen Ringende (RE1) beabstandet ist, der 4% bis 40%, vorzugsweise 4-20% der axialen Ringbreite (RB) des Ringsegments (14a) beträgt **und/oder** dass die zumindest eine Entlastungsöffnung (25), zumindest am Entlastungsöffnungsende (25a), eine Entlastungsöffnungslänge in Umfangsrichtung aufweist, die 2-100% axialen Ringbreite (RB) des Packungsrings (14) beträgt, vorzugsweise 2-50%, insbesondere maximal 25% der axialen Ringbreite (RB).

3. Packungsring (14) nach Anspruch 1 oder 2, **dadurch gekennzeichnet, dass** an zumindest einem Ringsegment (14a) zumindest zwei Entlastungsöffnungen (25) vorgesehen sind, wobei die Entlastungsöffnungen (25) jeweils ein in die radial innenliegende Innenumfangsfläche (18) des Ringsegments (14a) mündendes erstes Entlastungsöffnungsende (25a) aufweisen, wobei die ersten Entlastungsöffnungsenden (25a) zweier in Umfangsrichtung nebeneinander angeordneter Entlastungsöffnungen (25) in einem Entlastungsöffnungsumfangsabstand (z) voneinander beabstandet angeordnet sind, der vorzugsweise 1mm bis 15mm beträgt **und/oder** dass zumindest eine Entlastungsöffnung (25) vorgesehen ist, deren in die radial innenliegende Innenumfangsfläche (18) des Ringsegments (14a) mündendes erstes Entlastungsöffnungsende (25a) von einem, in die radial außenliegende Außenumfangsfläche (23) des Ringsegments (14a) mündenden zweiten Entlastungsöffnungsende (25b) der Entlastungsöffnung (25) in Umfangsrichtung beabstandet ist.

4. Packungsring (14) nach einem der Ansprüche 1 bis 3, **dadurch gekennzeichnet, dass** die zumindest eine Entlastungsöffnung (25), zumindest am Entlastungsöffnungsende (25a), eine axiale Entlastungsöffnungsbreite aufweist, die 2-30%, vorzugsweise 2-20% der axialen Ringbreite (RB) des Packungsrings (14) beträgt **und/oder** dass die zumindest eine Entlastungsöffnung (25) einen geraden Verlauf und einen konstanten kreisrunden Querschnitt mit einem Entlastungsöffnungsdurchmesser (d_{E}) aufweist, der zwischen 2-30%, vorzugsweise 2-20%der axialen Ringbreite (RB) des Packungsrings (14) beträgt.

5. Packungsring (14) nach einem der Ansprüche 1 bis 4, **dadurch gekennzeichnet, dass** an der radial außenliegenden Außenumfangsfläche (23) zumindest eines Ringsegments (14a), vorzugsweise jedes Ringsegments (14a) zumindest eine Axialnut (24) vorgesehen ist, die sich vom ersten axialen Ringende (RE1) bis zum zweiten axialen Ringende (RE2) erstreckt.

6. Packungsring (14) nach einem der Ansprüche 1 bis 5, **dadurch gekennzeichnet, dass** an zumindest einem Ringsegment (14a) zumindest eine Verschleißöffnung (27) vorgesehen ist, die sich von der radial außenliegenden Außenumfangsfläche (23) und/oder dem zweiten axialen Ringende (RE2) des Ringsegments (14a) in Richtung der radial innenliegenden Innenumfangsfläche (18) des Ringsegments (14a) erstreckt, wobei ein der Innenumfangsfläche (18) zugewandtes radial inneres Verschleißöffnungsende (27a) der zumindest einen Verschleißöffnung (27) in einem Abstand in radialer Richtung des Ringsegments (14a) von der radial innenliegenden Innenumfangsfläche (18) des Ringsegments (14a) beabstandet ist, der höchstens 40% einer, sich zwischen der außenliegenden Außenumfangsfläche (23) und der radial innenliegenden Innenumfangsfläche (18) des Ringsegments (14a) erstreckenden radialen Ringhöhe (RH) beträgt, wobei das Verschleißöffnungsende (27a) zwischen dem ersten und dem zweiten axialen Ringende (RE1, RE2) liegt und vom ersten und zweiten axialen Ringende (RE1, RE2) beabstandet ist.

7. Packungsring (14) nach Anspruch 6, **dadurch gekennzeichnet, dass** zumindest ein, der radial innenliegende Innenumfangsfläche (18) zugewandter Endabschnitt zumindest einer Verschleißöffnung (27) in Richtung des ersten axialen Ringendes (RE1) geneigt ist und/oder dass zumindest eine Verschleißöffnung (27) einen geraden Verlauf und einen konstanten kreisrunden Querschnitt mit einem Verschleißöffnungsdurchmesser (dv) aufweist, der 2-60%, vorzugsweise 2-40% der axialen Ringbreite (RB) des Packungsrings (14) beträgt.

8. Packungsring (14) nach einem der Ansprüche 6 bis 7 , **dadurch gekennzeichnet, dass** die zumindest eine Verschleißöffnung (27) in einem Verschleißöffnungsaxialabstand (y) in axialer Richtung vom ersten axialen Ringende (RE1) beabstandet ist, der 2% bis 20% der axialen Ringbreite (RB) beträgt, vorzugsweise 2-15%

9. Packungsring (14) nach einem der Ansprüche 1 bis 8, **dadurch gekennzeichnet, dass** an zumindest einem Ringsegment (14a) zumindest eine Ausgleichsausnehmung (32) vorgesehen ist, die sich von der radial außenliegenden Außenumfangsfläche (23) des Ringsegments (14a) in Richtung der radial innenliegenden Innenumfangsfläche (18) des Ringsegments (14a) erstreckt und vom ersten axialen Ringende (RE1) in Richtung des zweiten axialen Ringendes (RE2) erstreckt, wobei vorzugsweise zumindest eine Ausgleichsausnehmung (32) je Ringsegment vorgesehen ist.

10. Packungsring (14) nach einem der Ansprüche 1 bis 9, **dadurch gekennzeichnet, dass** an der radial innenliegenden Innenumfangsfläche (18) zumindest eines Ringsegments (14a) zumindest eine Anlaufausnehmung (33) vorgesehen ist, die sich in axialer Richtung des Ringsegments (14a) vom zweiten axialen Ringende (RE2) in Richtung des ersten axialen Ringendes (RE1) erstreckt und in radialer Richtung des Ringsegments (14a) von der radial innenliegenden Innenumfangsfläche (18) des Ringsegments (14a) in Richtung der radial außenliegenden Außenumfangsfläche (23) des Ringsegments (14a) erstreckt, um eine relativ zur gesamten radial innenliegenden Innenumfangsfläche (18) kleine Anlauffläche (34) auszubilden, wobei die Anlaufausnehmung (33) eine radiale Anlaufausnehmungstiefe (t_{AL}) von maximal 3% der Ringhöhe (RH) aufweist, wobei ein erstes Entlastungsöffnungsende (25a) der zumindest einen Entlastungsöffnung (25) bis zu einem Verschleiß der Anlauffläche (34) in die Anlaufausnehmung (33) mündet und nach einem Verschleiß der Anlauffläche (34) in die radial innenliegenden Innenumfangsfläche (18) mündet.

11. Abdichtungsvorrichtung (1) zur Abdichtung einer translatorisch oszillierenden Kolbenstange (2), mit einem Gehäuse (3), in dem eine Anzahl von axial hintereinander angeordneten Packungsringen (7) vorgesehen ist, wobei zumindest ein Packungsring (14) nach einem der Ansprüche 1 bis 10 vorgesehen ist.

12. Kolbenkompressor mit einem Kompressorgehäuse und zumindest einem daran angeordneten Zylindergehäuse, in dem ein Kolben translatorisch oszilliert, wobei der Kolben über eine Kolbenstange mit einer im Kompressorgehäuse angeordneten Kurbelwelle verbunden ist und mit zumindest einem im Kompressorgehäuse angeordneten Packungsring (14) nach einem der Ansprüche 1 bis 10, zur Abdichtung der Kolbenstange.

13. Kolbenkompressor nach Anspruch 12, **dadurch gekennzeichnet, dass** im Kompressorgehäuse eine Abdichtungsvorrichtung (1) mit einem Gehäuse (3) vorgesehen ist, in dem eine Anzahl von axial hintereinander angeordneten Packungsringen (7) vorgesehen ist, wobei zumindest ein Packungsring (14) nach einem der Ansprüche 1 bis 10 vorgesehen ist.

14. Verfahren zur Abdichtung einer translatorisch oszillierenden Kolbenstange eines Kolbenkompressors mit zumindest einem Packungsring (14), der eine zentrale zylindrische Öffnung (15) aufweist, durch die sich die Kolbenstange erstreckt, wobei der Packungsring (14) zumindest drei Ringsegmente (14a) mit jeweils einem ersten Segmentende (SE1) und einem zweiten Segmentende (SE2) in Umfangsrichtung aufweist, wobei eine erste Tangentialkontaktfläche (19a) des ersten Segmentendes (SE1) eines Ringsegments (14a) an einer zweiten Tangentialkontaktfläche (19b) des zweiten Segmentendes (SE2) eines in Umfangsrichtung daran anschließenden Ringsegments (14a) anliegt, um eine radiale Abdichtung zu erzeugen und eine, einem ersten axialen Ringende (RE1) des Packungsrings (14) zugewandte erste Axialkontaktfläche (16) des ersten Segmentendes (SE1) eines Ringsegments (14a) an einer, einem zweiten axialen Ringende (RE2) des Packungsrings (14) zugewandten zweiten Axialkontaktfläche (17) des zweiten Segmentendes (SE2) eines in Umfangsrichtung daran anschließenden Ringsegments (14a) anliegt, um eine axiale Abdichtung zu erzeugen, wobei der Packungsring (14) so im Kolbenkompressor angeordnet wird, dass das erste axiale Ringende (RE1) einem Kurbelgehäuse des Kolbenkompressors zugewandt ist, **dadurch gekennzeichnet, dass** ein in eine radial innenliegende Innenumfangsfläche (18) mündendes erstes Entlastungsöffnungsende (25a) zumindest einer, an zumindest einem Ringsegment (14a) vorgesehenen, sich von der radial innenliegenden Innenumfangsfläche (18) bis zu einer radial außenliegenden Außenumfangsfläche (23) und/oder bis zum zweiten axialen Ringende (RE2) des Ringsegments (14a) erstreckenden Entlastungsöffnung (25) in Abhängigkeit des radialen Verschleißes des Ringsegments (14a) in Richtung des ersten axialen Ringendes (RE1) wandert, indem zumindest ein, an die radial innenliegende Innenumfangsfläche (18) des Ringsegments (14a) angrenzender Abschnitt der zumindest einen Entlastungsöffnung (25) in Richtung des ersten axialen Ringendes (RE1) geneigt oder gekrümmt ausgebildet wird.

15. Verfahren nach Anspruch 14, **dadurch gekennzeichnet, dass** am Beginn einer Hochlaufphase des Kolbenkompressors eine druckbedingte Flächenpressung des Packungsrings (14) erhöht wird, indem an der radial innenliegenden Innenumfangsfläche (18) zumindest eines Ringsegments (14a) zumindest eine Anlaufausnehmung (33) mit einer radialen Anlaufausnehmungstiefe (tAL) von maximal 3% der Ringhöhe (RH) vorgesehen wird, die sich in axialer Richtung des Ringsegments (14a) vom zweiten axialen Ringende (RE2) in Richtung des ersten axialen Ringendes (RE1) erstreckt und in radialer Richtung des Ringsegments (14a) von der radial innenliegenden Innenumfangsfläche (18) des Ringsegments (14a) in Richtung der radial außenliegenden Außenumfangsfläche (23) des Ringsegments (14a) erstreckt, um eine relativ zur gesamten radial innenliegenden Innenumfangsfläche (18) kleine Anlauffläche (34) auszubilden, wobei das erste Entlastungsöffnungsende (25a) der zumindest einen Entlastungsöffnung (25) bis zu einem Verschleiß der Anlauffläche (34) in die Anlaufausnehmung (33) mündet und nach einem Verschleiß der Anlauffläche (34) in die radial innenliegenden Innenumfangsfläche (18) mündet.

## Claims

1. A packing ring (14) having at least three ring segments (14a) each having a first segment end (SE1) and a second segment end (SE2) in the circumferential direction, wherein a first tangential contact surface (19a) of the first segment end (SE1) of a ring segment (14a) abuts a second tangential contact surface (19b) of the second segment end (SE2) of a ring segment (14a) adjoining it in the circumferential direction to create a radial seal of the packing ring (14) and a first axial contact surface (16), facing toward a first axial ring end (RE1) of the packing ring (14), of the first segment end (SE1) of a ring segment (14a) abuts a second axial contact surface (17), facing toward a second axial ring end (RE2) of the packing ring (14), of the second segment end (SE2) of a ring segment (14a) adjoining it in the circumferential direction to create an axial seal of the packing ring (14), **characterized in that** at least one relief opening (25) is provided on at least one ring segment (14a), which extends from a radially inside inner circumferential surface (18) of the ring segment (14a) to a radially outside outer circumferential surface (23) and/or to the second axial ring end (RE2) of the ring segment (14a), wherein at least a portion of the at least one relief opening (25) adjoining the radially inside inner circumferential surface (18) of the ring segment (14a) is inclined or curved in the direction of the first axial ring end (RE1).

2. The packing ring (14) according to claim 1, **characterized in that** a first relief opening end (25a), which opens into the radially inside inner circumferential surface (18) of the ring segment (14a), of at least one relief opening (25) is spaced apart from the first axial ring end (RE1) at a relief opening axial distance (x), which is 4% to 40%, preferably 4-20% of the axial ring width (RB) of the ring segment (14a) and/or **in that** the at least one relief opening (25) has, at least at the relief opening end (25a), a relief opening length in the circumferential direction, which is 2-100% of the axial ring width (RB) of the packing ring (14), preferably 2-50%, in particular at most 25% of the axial ring width (RB).

3. The packing ring (14) according to claim 1 or 2 , **characterized in that** at least two relief openings (25) are provided on at least one ring segment (14a), wherein the relief openings (25) each have a first relief opening end (25a) opening into the radially inside inner circumferential surface (18) of the ring segment (14a), wherein the first relief opening ends (25a) of two relief openings (25) arranged next to one another in the circumferential direction are spaced apart from one another at a relief opening circumferential distance (z), which is preferably 1 mm to 15 mm and/or **in that** at least one relief opening (25) is provided, the first relief opening end (25a) of which, opening into the radially inside inner circumferential surface (18) of the ring segment (14a), is spaced apart in the circumferential direction from a second relief opening end (25b) of the relief opening (25), opening into the radially outside outer circumferential surface (23) of the ring segment (14a).

4. The packing ring (14) according to any one of claims 1 to 3, **characterized in that** the at least one relief opening (25) at least at the relief opening end (25a), has an axial relief opening width, which is 2-30%, preferably 2-20% of the axial ring width (RB) of the packing ring (14) and/or **in that** the at least one relief opening (25) has a straight course and a constant circular cross section having a relief opening diameter (d_{E}) which is between 2-30%, preferably 2-20% of the axial ring width (RB) of the packing ring (14).

5. The packing ring (14) according to any one of claims 1 to 4, **characterized in that** at least one axial groove (24), which extends from the first axial ring end (RE1) to the second axial ring end (RE2), is provided on the radially outside outer circumferential surface (23) of at least one ring segment (14a), preferably each ring segment (14a).

6. The packing ring (14) according to any one of claims 1 to 5, **characterized in that** at least one wear opening (27) is provided on at least one ring segment (14a), which opening extends from the radially outside outer circumferential surface (23) and/or the second axial ring end (RE2) of the ring segment (14a) in the direction of the radially inside inner circumferential surface (18) of the ring segment (14a), wherein a radially inner wear opening end (27a) of the at least one wear opening (27) facing toward the inner circumferential surface (18) is spaced apart in the radial direction of the ring segment (14a) from the radially inside inner circumferential surface (18) of the ring segment (14a) at a distance which is at most 40% of a radial ring height (RH) extending between the outside outer circumferential surface (23) and the radially inside inner circumferential surface (18) of the ring segment (14a), wherein the wear opening end (27a) lies between the first and the second axial ring ends (RE1, RE2) and is spaced apart from the first and second axial ring ends (RE1, RE2).

7. The packing ring (14) according to claim 6, **characterized in that** at least an end section facing toward the radially inside inner circumferential surface (18) of at least one wear opening (27) is inclined in the direction of the first axial ring end (RE1) and/or **in that** at least one wear opening (27) has a straight course and a constant circular cross section with a wear opening diameter (dv), which is 2-60%, is preferably 2-40% of the axial ring width (RB) of the packing ring (14).

8. The packing ring (14) according to any one of claims 6 to 7, **characterized in that** the at least one wear opening (27) is spaced apart from the first axial ring end (RE1) at a wear opening axial distance (y) in the axial direction which is 2% to 20% of the axial ring width (RB), preferably 2-15%.

9. The packing ring (14) according to any one of claims 1 to 8, **characterized in that** at least one compensation recess (32) is provided on at least one ring segment (14a), which extends from the radially outside outer circumferential surface (23) of the ring segment (14a) in the direction of the radially inside inner circumferential surface (18) of the ring segment (14a) and extends from the first axial ring end (RE1) in the direction of the second axial ring end (RE2), wherein preferably at least one compensation recess (32) is provided for each ring segment.

10. The packing ring (14) according to any one of claims 1 to 9, **characterized in that** at least one startup recess (33) is provided on the radially inside inner circumferential surface (18) of at least one ring segment (14a), which extends in the axial direction of the ring segment (14a) from the second axial ring end (RE2) in the direction of the first axial ring end (RE1) and in the radial direction of the ring segment (14a) from the radially inside inner circumferential surface (18) of the ring segment (14a) in the direction of the radially outside outer circumferential surface (23) of the ring segment (14a), in order to form a small startup surface (34) relative to the entire radially inside inner circumferential surface (18), wherein the startup recess (33) has a radial startup recess depth (t_{AL}) of at most 3% of the ring height (RH), wherein a first relief opening end (25a) of the at least one relief opening (25) opens into the startup recess (33) up to wear of the startup surface (34) and opens into the radially inside inner circumferential surface (18) after wear of the startup surface (34).

11. A sealing device (1) for sealing a translationally oscillating piston rod (2), having a housing (3) in which a number of packing rings (7) arranged axially in succession are provided, wherein at least one packing ring (14) according to any one of claims 1 to 10 is provided.

12. A piston compressor having a compressor housing and at least one cylinder housing arranged thereon, in which a piston translationally oscillates, wherein the piston is connected via a piston rod to a crankshaft arranged in the compressor housing, and having at least one packing ring (14) according to any one of claims 1 to 10 arranged in the compressor housing, for sealing the piston rod.

13. The piston compressor according to claim 12, **characterized in that** a sealing device (1) having a housing (3) is provided in the compressor housing, in which a number of packing rings (7) arranged axially in succession are provided, wherein at least one packing ring (14) according to any one of claims 1 to 10 is provided.

14. A method for sealing a translationally oscillating piston rod of a piston compressor using at least one packing ring (14), which has a central cylindrical opening (15), through which the piston rod extends, wherein the packing ring (14) has at least three ring segments (14a) each having a first segment end (SE1) and a second segment end (SE2) in the circumferential direction, wherein a first tangential contact surface (19a) of the first sgment end (SE1) of one ring segment (14a) abuts a second tangential contact surface (19b) of the second segment end (SE2) of a ring segment (14a) adjoining thereon in the circumferential direction in order to create a radial seal and a first axial contact surface (16) of the first segment end (SE1) of one ring segment (14a), which faces toward a first axial ring end (RE1) of the packing ring (14), abuts a second axial contact surface (17) of the second segment end (SE2) of a ring segment (14a) adjoining thereon in the circumferential direction, which faces toward a second axial ring end (RE2) of the packing ring (14), in order to create an axial seal, wherein the packing ring (14) is arranged in the piston compressor so that the first axial ring end (RE1) faces toward a crankcase of the piston compressor, **characterized in that** a first relief opening end (25a), which opens into a radially inside inner circumferential surface (18), of at least one relief opening (25), which is provided on at least one ring segment (14a) and extends from the radially inside inner circumferential surface (18) to a radially outside outer circumferential surface (23) and/or to the second axial ring end (RE2) of the ring segment (14a), travels in dependence on the radial wear of the ring segment (14a) in the direction of the first axial ring end (RE1), due to at least a portion of the at least one relief opening (25) adjoining the radially inside inner circumferential surface (18) of the ring segment (14a) being formed inclined or curved in the direction of the first axial ring end (RE1).

15. The method according to claim 14, **characterized in that** at the beginning of a startup phase of the piston compressor, a pressure-related surface pressure of the packing ring (14) is increased, by providing on the radially inside inner circumferential surface (18) of at least one ring segment (14a) at least one startup recess (33) having a radial startup recess depth (tAL) of at most 3% of the ring height (RH), which recess extends in the axial direction of the ring segment (14a) from the second axial ring end (RE2) in the direction of the first axial ring end (RE1), and extends in the radial direction of the ring segment (14a) from the radially inside inner circumferential surface (18) of the ring segment (14a) in the direction of the radially outside outer circumferential surface (23) of the ring segment (14a) in order to form a small startup surface (34) relative to the entire radially inside inner circumferential surface (18), wherein the first relief opening end (25a) of the at least one relief opening (25) opens into the startup recess (33) up to wear of the startup surface (34) and opens into the radially inside inner circumferential surface (18) after wear of the startup surface (34).

## Revendications

1. Bague de garniture (14) comportant au moins trois segments de bague (14a) comportant respectivement une première extrémité de segment (SE1) et une seconde extrémité de segment (SE2) dans la direction circonférentielle, dans laquelle une première surface de contact tangentielle (19a) de la première extrémité de segment (SE1) d'un segment de bague (14a) repose sur une seconde surface de contact tangentielle (19b) de la seconde extrémité de segment (SE2) d'un segment de bague (14a) adjacent à celle-ci dans la direction circonférentielle, afin de produire une étanchéité radiale de la bague de garniture (14), et une première surface de contact axiale (16) faisant face à une première extrémité de bague (RE1) axiale de la bague de garniture (14), de la première extrémité de segment (SE1) d'un segment de bague (14a) repose sur une seconde surface de contact axiale (17) faisant face à une seconde extrémité de bague (RE2) axiale de la bague de garniture (14), de la seconde extrémité de segment (SE2) d'un segment de bague (14a) adjacent à celle-ci dans la direction circonférentielle, afin de produire une étanchéité axiale de la bague de garniture (14), **caractérisée en ce qu'**au moins une ouverture de décharge (25) est située sur au moins un segment de bague (14a), laquelle s'étend d'une surface circonférentielle interne (18) radialement intérieure du segment de bague (14a) jusqu'à une surface circonférentielle externe (23) radialement extérieure et/ou jusqu'à la seconde extrémité de bague (RE2) axiale du segment de bague (14a), dans laquelle au moins une section de l'au moins une ouverture de décharge (25) contiguë à la surface circonférentielle interne (18) radialement intérieure du segment de bague (14a) est inclinée ou incurvée dans la direction de la première extrémité de bague (RE1) axiale.

2. Bague de garniture (14) selon la revendication 1, **caractérisée en ce qu'**une première extrémité d'ouverture de décharge (25a) d'au moins une ouverture de décharge (25) débouchant dans la surface circonférentielle interne (18) radialement intérieure du segment de bague (14a) est espacée de la première extrémité de bague (RE1) axiale d'une distance axiale d'ouverture de décharge (x), laquelle est de 4 % à 40 %, de préférence de 4 à 20 %, de la largeur de bague (RB) axiale du segment de bague (14a) et/ou **en ce que** l'au moins une ouverture de décharge (25), au moins au niveau de l'extrémité d'ouverture de décharge (25a), présente une longueur d'ouverture de décharge dans la direction circonférentielle, laquelle est de 2 à 100 % de la largeur de bague (RB) axiale de la bague de garniture (14), de préférence de 2 à 50 %, en particulier au maximum de 25 % de la largeur de bague (RB) axiale.

3. Bague de garniture (14) selon la revendication 1 ou 2, **caractérisée en ce qu**'au moins deux ouvertures de décharge (25) sont situées sur au moins un segment de bague (14a), dans laquelle les ouvertures de décharge (25) comportent respectivement une première extrémité d'ouverture de décharge (25a) débouchant dans la surface circonférentielle interne (18) radialement intérieure du segment de bague (14a), dans laquelle les premières extrémités d'ouverture de décharge (25a) de deux ouvertures de décharge (25) disposées l'une à côté de l'autre dans la direction circonférentielle sont espacées l'une de l'autre d'une distance circonférentielle d'ouverture de décharge (z), laquelle est de préférence de 1 mm à 15 mm et/ou en ce qu'au moins une ouverture de décharge (25) est fournie, dont la première extrémité d'ouverture de décharge (25a) débouchant dans la surface circonférentielle interne (18) radialement intérieure du segment de bague (14a) est espacée, dans la direction circonférentielle, d'une seconde extrémité d'ouverture de décharge (25b) de l'ouverture de décharge (25) débouchant dans la surface circonférentielle externe (23) radialement extérieure du segment de bague (14a).

4. Bague de garniture (14) selon l'une quelconque des revendications 1 à 3, **caractérisée en ce que** l'au moins une ouverture de décharge (25), au moins au niveau de l'extrémité d'ouverture de décharge (25a), présente une largeur d'ouverture de décharge axiale, laquelle est de 2 à 30 %, de préférence de 2 à 20 %, de la largeur de bague (RB) axiale de la bague de garniture (14) et/ou **en ce que** l'au moins une ouverture de décharge (25) comporte un profil rectiligne et une section transversale circulaire constante présentant un diamètre d'ouverture de décharge (d_{E}) compris entre 2 et 30 %, de préférence entre 2 et 20 %, de la largeur de bague (RB) axiale de la bague de garniture (14).

5. Bague de garniture (14) selon l'une quelconque des revendications 1 à 4, **caractérisée en ce qu**'au moins une rainure axiale (24) est située sur la surface circonférentielle externe (23) radialement extérieure d'au moins un segment de bague (14a), de préférence de chaque segment de bague (14a), laquelle s'étend de la première extrémité de bague (RE1) axiale jusqu'à la seconde extrémité de bague (RE2) axiale.

6. Bague de garniture (14) selon l'une quelconque des revendications 1 à 5, **caractérisée en ce qu**'au moins une ouverture d'usure (27) est située sur au moins un segment de bague (14a), laquelle s'étend depuis la surface circonférentielle externe (23) radialement extérieure et/ou la seconde extrémité de bague (RE2) axiale du segment de bague (14a) dans la direction de la surface circonférentielle interne (18) radialement intérieure du segment de bague (14a), dans laquelle une extrémité d'ouverture d'usure (27a) faisant face à la surface circonférentielle interne (18), radialement intérieure de l'au moins une ouverture d'usure (27) est espacée de la surface circonférentielle interne (18) radialement intérieure du segment de bague (14a) d'une distance, dans la direction radiale du segment de bague (14a), d'au plus 40 % d'une hauteur de bague (RH) s'étendant entre la surface circonférentielle externe (23) radialement extérieure et la surface circonférentielle interne (18) radialement intérieure du segment de bague (14a), dans laquelle l'extrémité d'ouverture d'usure (27a) est située entre la première et la seconde extrémité de bague (RE1, RE2) axiales et est espacée de la première et de la seconde extrémité de bague (RE1, RE2) axiales.

7. Bague de garniture (14) selon la revendication 6, **caractérisée en ce qu'**au moins une section d'extrémité d'au moins une ouverture d'usure (27) faisant face à la surface circonférentielle interne (18) radialement intérieure est inclinée dans la direction de la première extrémité de bague (RE1) axiale et/ou **en ce qu'**au moins une ouverture d'usure (27) comporte un profil rectiligne et une section transversale circulaire constante présentant un diamètre d'ouverture d'usure (dᵥ), lequel est de 2 à 60 %, de préférence de 2 à 40 %, de la largeur de bague (RB) axiale de la bague de garniture (14).

8. Bague de garniture (14) selon l'une des revendications 6 à 7, **caractérisée en ce que** l'au moins une ouverture d'usure (27) est espacée de la première extrémité de bague (RE1) axiale d'une distance axiale d'ouverture d'usure (y) dans la direction axiale, laquelle est de 2 % à 20 %, de préférence de 2 à 15 %, de la largeur de bague (RB) axiale.

9. Bague de garniture (14) selon l'une quelconque des revendications 1 à 8, **caractérisée en ce qu'**au moins un évidement d'équilibrage (32) est situé sur l'au moins un segment de bague (14a), lequel s'étend depuis la surface circonférentielle externe (23) radialement extérieure du segment de bague (14a) dans la direction de la surface circonférentielle interne (18) radialement intérieure du segment de bague (14a) et s'étend depuis la première extrémité de bague (RE1) axiale dans la direction de la seconde extrémité de bague (RE2) axiale, dans laquelle, de préférence l'au moins un évidement d'équilibrage (32) étant fourni pour chaque segment de bague.

10. Bague de garniture (14) selon l'une quelconque des revendications 1 à 9, **caractérisée en ce qu'**au moins un évidement de butée (33) est situé sur la surface circonférentielle interne (18) radialement intérieure de l'au moins un segment de bague (14a), lequel s'étend dans la direction axiale du segment de bague (14a) depuis la seconde extrémité de bague (RE2) axiale dans la direction de la première extrémité de bague (RE1) axiale et s'étend dans la direction radiale du segment de bague (14a) depuis la surface circonférentielle interne (18) radialement intérieure du segment de bague (14a) dans la direction de la surface circonférentielle externe (23) radialement extérieure du segment de bague (14a), afin de former une surface de butée (34), petite par rapport à toute la surface circonférentielle interne (18) radialement intérieure, dans laquelle l'évidement de butée (33) présente une profondeur d'évidement de butée radiale (t_{AL}) d'au plus 3 % de la hauteur de bague (RH), dans laquelle une première extrémité d'ouverture de décharge (25a) de l'au moins une ouverture de décharge (25) débouche dans l'évidement de butée (33) jusqu'à une usure de la surface de butée (34), et débouche dans la surface circonférentielle interne (18) radialement intérieure après l'usure de la surface de butée (34).

11. Dispositif d'étanchéité (1) permettant d'étancher une tige de piston (2) oscillant en translation, comportant un carter (3) dans lequel un certain nombre de bagues de garniture (7) disposées axialement les unes derrière les autres sont situées, dans lequel au moins une bague de garniture (14) selon l'une quelconque des revendications 1 à 10 est fournie.

12. Compresseur à piston comportant un carter de compresseur et au moins un carter de cylindre disposé sur celui-ci, dans lequel un piston oscille en translation, dans lequel le piston est relié à un arbre à manivelle disposé dans le carter de compresseur par l'intermédiaire d'une tige de piston, et comporte au moins une bague de garniture (14) selon l'une quelconque des revendications 1 à 10, disposée dans le carter de compresseur afin d'étancher la tige de piston.

13. Compresseur à piston selon la revendication 12, **caractérisé en ce qu'**un dispositif d'étanchéité (1) comportant un carter (3) est situé dans le carter de compresseur, dans lequel un nombre de bagues de garniture (7) disposées axialement les unes derrière les autres sont situées, dans lequel au moins une bague de garniture (14) selon l'une quelconque des revendications 1 à 10 est fournie.

14. Procédé d'étanchéité d'une tige de piston oscillant en translation d'un compresseur à piston comportant au moins une bague de garniture (14), laquelle comporte une ouverture (15) cylindrique centrale à travers laquelle s'étend la tige de piston, dans lequel la bague de garniture (14) comporte au moins trois segments de bague (14a) comportant respectivement une première extrémité de segment (SE1) et une seconde extrémité de segment (SE2) dans la direction circonférentielle, dans lequel une première surface de contact tangentielle (19a) de la première extrémité de segment (SE1) d'un segment de bague (14a) repose sur une seconde surface de contact tangentielle (19b) de la seconde extrémité de segment (SE2) d'un segment de bague (14a) adjacent à celle-ci dans la direction circonférentielle, afin de produire une étanchéité radiale, et une première surface de contact axiale (16) faisant face à une première extrémité de bague (RE1) axiale de la bague de garniture (14), de la première extrémité de segment (SE1) d'un segment de bague (14a) reposant sur une seconde surface de contact axiale (17) faisant face à une seconde extrémité de bague (RE2) axiale de la bague de garniture (14), de la seconde extrémité de segment (SE2) d'un segment de bague (14a) adjacent à celle-ci dans la direction circonférentielle, afin de produire une étanchéité axiale, dans lequel la bague d'étanchéité (14) est disposée dans le compresseur à piston de telle sorte que la première extrémité de bague (RE1) axiale fait face à un carter de manivelle du compresseur à piston, **caractérisé en ce qu**'une première extrémité d'ouverture de décharge (25a), débouchant dans une surface circonférentielle interne (18) radialement intérieure, d'au moins une ouverture de décharge (25) située sur au moins un segment de bague (14a), s'étendant de la surface circonférentielle interne (18) radialement intérieure jusqu'à une surface circonférentielle externe (23) radialement extérieure et/ou jusqu'à la seconde extrémité de bague (RE2) axiale du segment de bague (14a), suit, en fonction de l'usure radiale du segment de bague (14a), la direction de la première extrémité de bague (RE1) axiale, au moins une section de l'au moins une ouverture de décharge (25) attenante à la surface circonférentielle interne (18) radialement intérieure du segment de bague (14a) étant coçue inclinée ou courbée dans la direction de la première extrémité de bague (RE1) axiale.

15. Procédé selon la revendication 14, **caractérisé en ce qu**'au début d'une phase de démarrage du compresseur à piston, une pression superficielle de la bague de garniture (14) liée à la pression est augmentée, sur la surface circonférentielle interne (18) radialement intérieure d'au moins un segment de bague (14a), au moins un évidement de butée (33) présentant une profondeur d'évidement de butée (tAL) radiale d'au maximum 3 % de la hauteur de bague (RH) étant fourni, lequel s'étend, dans la direction axiale du segment de bague (14a), depuis la seconde extrémité de bague (RE2) axiale dans la direction de la première extrémité de bague (RE1) axiale et, dans la direction radiale du segment de bague (14a), depuis la surface circonférentielle interne (18) radialement intérieure du segment de bague (14a) dans la direction de la surface circonférentielle externe (23) radialement extérieure du segment de bague (14a), afin de former une surface de butée (34) petite par rapport à toute la surface circonférentielle interne (18) radialement intérieure, dans lequel la première extrémité d'ouverture de décharge (25a) de l'au moins une ouverture de décharge (25) débouche dans l'évidement de butée (33) jusqu'à l'usure de la surface de butée (34), et débouche dans la surface circonférentielle interne (18) radialement intérieure après l'usure de la surface de butée (34).
